# EUROPEAN PATENT APPLICATION

(11) **EP 4 525 198 A1**
(43) Date of publication of application: **19.03.2025**
(21) Application number: 24816895.7
(22) Date of filing: 11.06.2024
(51) Int. Cl.: H01M 50/569

(54) **BATTERY, BATTERY MODULE, BATTERY PACK, BATTERY MONITORING SYSTEM, AND VEHICLE**

(30) Priority: 09.06.2023 CN 202321486103 U; 09.06.2023 CN 202310690446; 16.06.2023 CN 202321559379 U; 25.06.2023 CN 202310754702; 29.06.2023 CN 202321691819 U; 04.08.2023 CN 202322109804 U
(71) Applicant: Eve Power Co., Ltd., Jingmen, Hubei 448000 (CN)
(72) Inventor: WANG, Jiao, Jingmen, Hubei 448000 (CN); QIU, Zhangheng, Jingmen, Hubei 448000 (CN); WANG, Hua, Jingmen, Hubei 448000 (CN); YUAN, Dingding, Jingmen, Hubei 448000 (CN); WU, Ying, Jingmen, Hubei 448000 (CN); WANG, Han, Jingmen, Hubei 448000 (CN); WANG, Ziyang, Jingmen, Hubei 448000 (CN); LIU, Hao, Jingmen, Hubei 448000 (CN); YANG, Yabin, Jingmen, Hubei 448000 (CN); HE, Wei, Jingmen, Hubei 448000 (CN); LIU, Jincheng, Jingmen, Hubei 448000 (CN)
(74) Representative: Berggren Oy
(86) International application number: PCT/CN2024/098515
(87) International publication number: WO 2024/251297

(57) **Abstract**

A battery, a battery module, a battery pack, a battery monitoring system and a vehicle are provided. The battery includes a housing (10); one or more cells (20) disposed in the housing (10); and a sensing structure disposed in the housing (10), and the sensing structure is configured to collect status data within the battery and transmit the status data to the outside of the battery.

## Description

This application claims priority to and the benefit of Chinese Patent Application No. 202321486103.4 filed on June 09, 2023, Chinese Patent Application No. 202310690446.0 filed on June 09, 2023, Chinese Patent Application No. 202321559379.0 filed on June 16, 2023, Chinese Patent Application No. 202310754702.8 filed on June 25, 2023, Chinese Patent Application No. 202321691819.8 filed on June 29, 2023, and Chinese Patent Application No. 202322109804.2 filed on August 04, 2023, the disclosure of which are incorporated herein by reference in their entireties.

### TECHNICAL FIELD

The present disclosure relates to the field of battery technology, and in particular, to a battery, a battery module, a battery pack, a battery monitoring system and a vehicle.

### BACKGROUND

Status monitoring of the battery is the guarantee of reliable battery operation. In the related technology, a sensor is disposed inside the battery, and the sensor transmits signals to the outside of the battery through optical fiber and other wire transmission methods.

### SUMMARY

However, this kind of transmission method needs to punch holes in the top cover and aluminum housing of the battery, which may damage the original structure of the battery and affect the mechanical properties of the battery itself.

In a first aspect, the present disclosure provides a battery including: a housing; one or more cells disposed in the housing; and a sensing structure disposed in the housing, the sensing structure is configured to collect status data within the battery and transmit the status data to an outside of the battery.

In a second aspect, the present disclosure further provides a battery module including a plurality of batteries described above, and the plurality of batteries are connected in series or in parallel.

In a third aspect, the present disclosure further provides a battery pack including a plurality of batteries described above, and the plurality of batteries are connected in series or in parallel.

In a fourth aspect, the present disclosure further provides a vehicle including the battery pack described above.

### Beneficial effects

In the battery provided by the present disclosure, the signal collecting terminal of the sensor is disposed inside the housing to collect the status parameters of the battery. Since the signal output terminal is coupled and electrically connected to the electrical transmitting terminal, at least part of the electrical transmitting terminal is disposed outside the housing, the status parameters are transmitted to the outside of the battery through the electrical transmitting terminal, thereby addressing the technical problem of damaging the battery structure by punching lead wire holes on the battery housing due to the installation of the sensor. The present disclosure does not need to dispose the lead wire holes, so that the present disclosure does not only destroy the original appearance of the battery, but also does not need to adjust the air tightness of the battery, and further, it does not need to introduce other devices that affect the inherent performance of the battery, which are beneficial to improving the service life and performance of the battery. In addition, since the performance (capacity, voltage, etc.) detection of the battery itself is also transmitted through the pole, the external data receiving and recording device can realize the simultaneous reception and display of the performance of the battery itself and the sensor signals. The data collected by the sensor belongs to the same transmission path as the performance signals of the battery itself such as battery capacity and voltage, which facilitates linkage analysis of sensor data and performance data of the battery itself during data analysis to achieve one-to-one correspondence.

### BRIEF DESCRIPTION OF THE DRAWINGS

FIG. 1 is a perspective schematic diagram of a cell according to some embodiments of the present disclosure.
FIG. 2 is a top view of a cell according to some embodiments of the present disclosure.
FIG. 3 is a top view of a form of a cell provided with second detecting devices according to some embodiments of the present disclosure.
FIG. 4 is a top view of another form of a cell provided with second detecting devices according to some embodiments of the present disclosure.
FIG. 5 is an exploded schematic diagram of a cell and a housing according to some embodiments of the present disclosure.
FIG. 6 is a schematic diagram of a structure of a battery separator according to some embodiments of the present disclosure.
FIG. 7 is a schematic diagram of a stacked structure of a battery separator, a positive electrode plate and a negative electrode plate according to some embodiments of the present disclosure.
FIG. 8 is a schematic diagram of another stacked structure of a battery separator, a positive electrode plate and a negative electrode plate according to some embodiments of the present disclosure.
FIG. 9 is a schematic diagram of a structure of a battery according to some embodiments of the present disclosure.
FIG. 10 is a schematic diagram of a structure of a separator provided with temperature sensing wires according to some embodiments of the present disclosure.
FIG. 11 is a schematic diagram of a structure of a battery (with a chip being located on a top portion of the battery) according to some embodiments of the present disclosure.
FIG. 12 is a schematic diagram of another structure of a battery (with a chip being located on a bottom portion of the battery) according to some embodiments of the present disclosure.
FIG. 13 is a schematic diagram of yet another structure of a battery (with a chip being located on a side portion of the battery) according to some embodiments of the present disclosure.
FIG. 14 is a perspective schematic diagram of a battery according to some embodiments of the present disclosure.
FIG. 15 is a cross-sectional view of a battery according to some embodiments of the present disclosure.
FIG. 16 is a schematic diagram of a structure of signal collection and transmission of a sensor in a battery according to some embodiments of the present disclosure.
FIG. 17 is a schematic diagram of a structure of a signal output terminal of a sensor and a tab according to some embodiments of the present disclosure.
FIG. 18 is a schematic diagram of a layout of signal collecting terminals of sensors according to some embodiments of the present disclosure.
FIG. 19 is a schematic diagram of another layout of a signal collecting terminal of a sensor according to some embodiments of the present disclosure.
FIG. 20 is a schematic diagram of a structure of a signal output terminal and a negative tab according to some embodiments of the present disclosure.
FIG. 21 is a schematic diagram of a structure of a signal output terminal and a positive tab according to some embodiments of the present disclosure.
FIG. 22 is a schematic diagram of a layout structure of signal output terminals when sensors are disposed in two cells according to some embodiments of the present disclosure.
FIG. 23 is a schematic diagram of another layout of signal collecting terminals of sensors according to some embodiments of the present disclosure.
FIG. 24 is a schematic diagram of a structure of a lithium-ion battery according to some embodiments of the present disclosure.
FIG. 25 is a schematic cross-sectional diagram of the lithium-ion battery in FIG. 24.
FIG. 26 is a schematic diagram of a structure of a cell in FIG. 25.
FIG. 27 is a schematic diagram of a structure of a detecting sensor being disposed on an electrode plate in FIG. 26.
FIG. 28 is a schematic diagram of a structure of an electrode plate in FIG. 26.
FIG. 29 is a schematic diagram of another structure of a cell in FIG. 25.

### Description of the drawings.

### DETAILED DESCRIPTION

In the description of the present disclosure, unless otherwise explicitly specified and limited, the terms "coupled", "connected" and "fixed" should be understood in a broad sense. For example, it can be a fixed connection, a detachable connection, or form an integral body; it can be a mechanical connection or an electrical connection; it can be a direct connection or an indirect connection through an intermediary, and it can be an internal connection between two elements or an interaction between two elements. For those of ordinary skill in the art, the specific meanings of the above terms in the present disclosure may be understood based on specific circumstances.

In the present disclosure, unless otherwise explicitly specified and limited, a first feature being "above" or "under" a second feature includes that the first feature is in direct contact with the second feature, or it may include that the first feature is not in direct contact with the second feature, but is in contact with the second feature through additional features between them. Furthermore, the first feature being "on", "above" and "over" the second feature includes that the first feature is directly above or obliquely above the second feature, and the first feature is higher in horizontal height than the second feature. The first feature being "below", "under" and "beneath" the second feature includes that the first feature is directly below or obliquely below the second feature, and the first feature is less in horizontal height than the second feature.

In the description of the embodiments, the orientation or positional relationship indicated by terms such as "upper", "lower", "left", "right", "front", "rear" and the like are based on the orientation or positional relationship shown in the accompanying drawings. It is only for the convenience of description and simplifying the operation, and it does not indicate or imply that the device or element referred to must have a specific orientation, be constructed and operated in a specific orientation, therefore, it should not be interpreted as limitations of the present disclosure. In addition, the terms "first" and "second" are only used for descriptive purposes, and have no special meanings.

### Embodiment One

An Embodiments of the present disclosure provides a battery including: a housing 10; a cell 20 disposed in the housing 10; and a sensing structure disposed in the housing 10, and the sensing structure is configured to collect status data within the battery and transmitting the status data to the outside of the battery.

In some embodiments, the cell 20 includes electrode plates 21 and a separator 22. The sensing structure is disposed on the separator 22 and/or the electrode plate 21, and the sensing structure is configured to monitor the status data of the separator 22 and/or the electrode plate 21 and transmit the status data to an external receiving device.

### Embodiment Two

In the related technology, a sensor is disposed between the cell and the housing to monitor changes in the expansion force of the battery. However, the monitoring results are inaccurate and cannot reflect the changes in the expansion force during the charging and discharging process of the battery, which poses safety risks to the battery.

An embodiment of the present disclosure provides a cell 20 to solve the problem that the monitoring of the battery expansion force is inaccurate in related technologies.

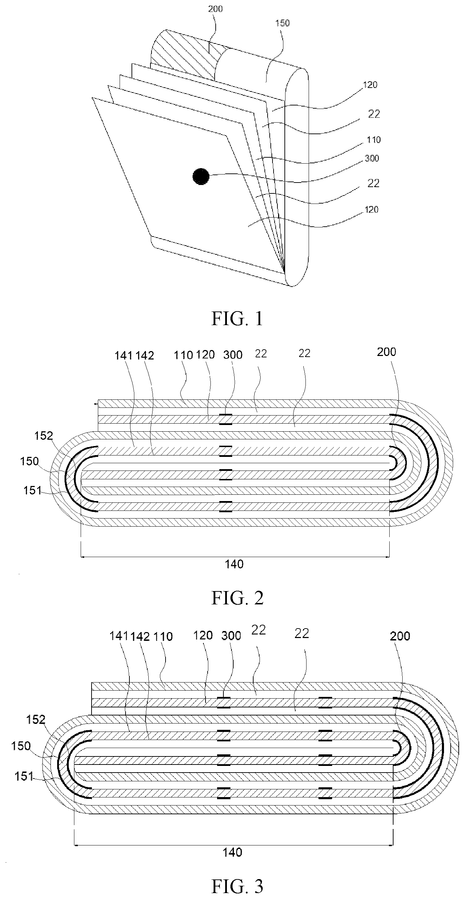

Referring to FIG. 1 and 2, FIG. 1 is a perspective schematic diagram of a cell according to some embodiments of the present disclosure, and FIG. 2 is a top view of a cell according to some embodiments of the present disclosure.

The cell 20 includes the electrode plate 21, the separator 22 and a plurality of first detecting devices such as the first detecting devices 200. The electrode plate 21 includes a first electrode plate 110 and a second electrode plate 120. One of the first electrode plate 110 and the second electrode plate 120 is a positive electrode plate, and the other is a negative electrode plate.

The separator 22 is disposed between the first electrode plate 110 and the second electrode plate 120, and the separator 22 is configured to separate the first electrode plate 110 and the second electrode plate 120. The first electrode plate 110 and the second electrode plate 120 have opposite polarities, for example, the first electrode plate 110 is a positive electrode plate, and the second electrode plate 120 is a negative electrode plate. The first electrode plate 110, the second electrode plate 120 and the separator 22 are disposed in a wound manner. The first electrode plate 110, the second electrode plate 120 and the separator 22 are composited in advance, and two sides of each of the first electrode plate 110, the second electrode plate 120 and the separator 22 are aligned with each other and wound to form N turns of the first electrode plate 110, N turns of the second electrode plate 120 and N turns of the separator 22, and N is an integer 2 greater than 1. Each turn of the first electrode plate 110, each turn of the second electrode plate 120 and each turn of the separator 22 respectively includes two planar structures 140 and two cambered surface structures 150. The two planar structures 140 of each turn of the first electrode plate 110, each turn of the second electrode plate 120 and each turn of the separator 22 are respectively disposed in parallel, and the two cambered surface structures 150 of each turn of the first electrode plate 110, each turn of the second electrode plate 120 and each turn of the separator 22 are respectively disposed oppositely. Two cambered surface structures 150 are disposed at two ends of the planar structures 140, and the two cambered surface structures 150 are connected with the two planar structures 140 to form a runway shape.

Two first detecting devices 200 are respectively disposed in alignment on two sides of the cambered surface structure 150 of at least one turn of the second electrode plate 120. Each of the two first detecting devices 200 is located between a corresponding position of the second electrode plate 120 and a position of the separator 22 adjacent thereto, each of the first detecting devices 200 is configured to monitor the expansion force of the corresponding cambered surface structure 150 of the second electrode plate 120, which include the following situations.

Two first detecting devices 200 are respectively disposed in alignment on two sides of the cambered surface structure 150 of any turn of the second electrode plate 120. For example, two first detecting devices 200 are respectively disposed in alignment on two sides of the cambered surface structure 150 of the n-th turn of the second electrode plate 120. Two first detecting devices 200 are respectively disposed in alignment on two sides of one of the two cambered surface structures 150 of the n-th turn of the second electrode plate 120, or two first detecting devices 200 are respectively disposed in alignment on two sides of each of the two cambered surface structures 150 of the n-th turn of the second electrode plate 120. Each of the first detecting devices 200 is located between a position of the n-th turn of the second electrode plate 120 and a position of the separator 22 adjacent thereto, the first detecting device 200 is configured to monitor the expansion force of the cambered surface structure 150 of the n-th turn of the second electrode plate 120.

Two first detecting devices 200 are respectively disposed in alignment on two sides of the cambered surface structure 150 of any two turns, any three turns or more turns of the second electrode plate 120. For example, two first detecting devices 200 are respectively disposed in alignment on two sides of the cambered surface structure 150 of the n-th turn of the second electrode plate 120, and two first detecting devices 200 are respectively disposed in alignment on two sides of the cambered surface structure 150 of the m-th turn of the second electrode plate 120, the n-th turn of second electrode plate 120 and the m-th turn of second electrode plate 120 can be disposed adjacent to each other or can be spaced apart by several turns of the second electrode plate. Two first detecting devices 200 are respectively disposed in alignment on two sides of one of two cambered surface structures 150 of the n-th turn of the second electrode plate 120, or two first detecting devices 200 are respectively disposed in alignment on two sides of each of two cambered surface structures 150 of the n-th turn of the second electrode plate 120. The first detecting device 200 is located between a position of the n-th turn of the second electrode plate 120 and a position of the separator 22 adjacent thereto, the first detecting device 200 is configured to monitor the expansion force of the cambered surface structure 150 of the n-th turn of the second electrode plate 120. Two first detecting devices 200 are respectively disposed in alignment on two sides of one of two cambered surface structures 150 of the m-th turn of the second electrode plate 120, or two first detecting devices 200 are respectively disposed in alignment on two sides of each of two cambered surface structures 150 of the m-th turn of the second electrode plate 120. The first detecting device 200 is located between a positon of the m-th turn of the second electrode plate 120 and a position of the separator 22 adjacent thereto, the first detecting device 200 is configured to monitor the expansion force of the cambered surface structure 150 of the m-th turn of the second electrode plate 120.

Two first detecting devices 200 are respectively disposed in alignment on two sides of the cambered surface structure 150 of each turn of the second electrode plate 120. Two first detecting devices 200 are respectively disposed in alignment on two sides of one of two cambered surface structures 150 of each turn of the second electrode plate 120, or two first detecting devices 200 are respectively disposed in alignment on two sides of each of two cambered surface structures 150 of each turn of the second electrode plate 120. The cambered surface structure 150 of each turn of the second electrode plate 120 is provided with the first detecting device 200, so as to monitor the expansion force changes of each turn of the second electrode plate 120, so that the monitoring is more comprehensive and the detection results are accurate.

It can be understood that that by monitoring the expansion force inside the cell in real time, the difference in expansion force performance inside the cell can be identified, which is conducive to simulation modeling, so as to realize the prediction of the expansion force and battery life, and guiding the design of the battery structural strength. Due to the fact that the cambered surface structure 150 of the second electrode plate 120 is the area with most uneven force distribution within the cell and the position where lithium precipitation occurs first, by disposing the first detecting device 200 at the cambered surface structure 150 of the second electrode plate 120, it is possible to detect the expansion force at the cambered surface structure 150 of the second electrode plate 120 in real time, which is more instructive, so as to overcome the problem of inaccurate monitoring results of the battery expansion force in related technologies, and detect the expansion force at the most easily deformed position inside the battery, so that the test results are accurate.

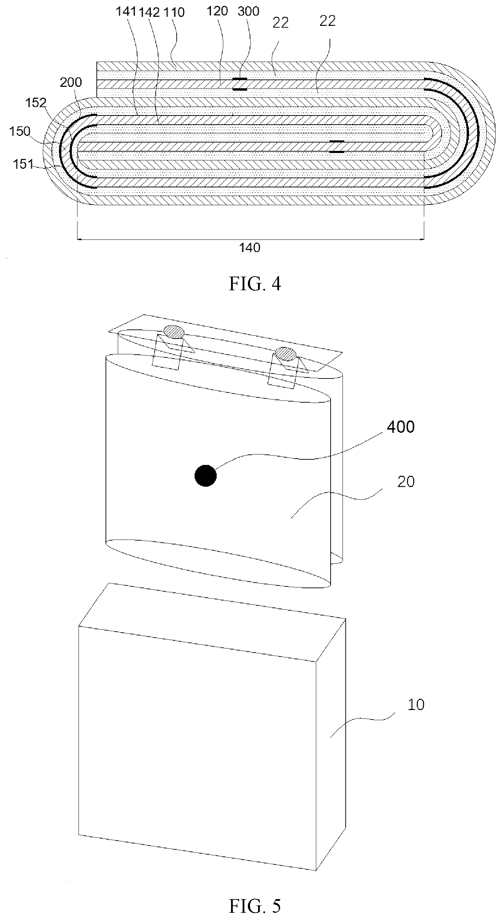

Referring to FIG. 2, FIG. 3 and FIG. 4, FIG. 3 is a top view of a form of a cell provided with a second detecting device according to some embodiments of the present disclosure, and FIG. 4 is a top view of another form of a cell provided with a second detecting device according to some embodiments of the present disclosure.

In some embodiments, as shown in FIG. 2, the cell further includes a plurality of second detecting devices 300. Two second detecting devices 300 are respectively disposed in alignment on two sides of the planar structure 140 of at least one turn of the second electrode plate 120. Each of the two second detecting devices 300 is located between a corresponding position of the second electrode plate 120 and the position of the separator 22 adjacent thereto, the second detecting device 200 is configured to monitor the expansion force of the corresponding planar structure 140 of the second electrode plate 120, which include the following situations.

Referring to FIG. 1, two second detecting devices 300 are respectively disposed in alignment on two sides of the planar structure 140 of any turn of the second electrode plate 120. For example, two second detecting devices 300 are respectively disposed in alignment on two sides of the planar structure 140 of the n-th turn of the second electrode plate 120. Two second detecting devices 300 are respectively disposed in alignment on two sides of one of two planar structures 140 of the n-th turn of the second electrode plate 120, or two second detecting devices 300 are respectively disposed in alignment on two sides of each of two planar structures 140 of the n-th turn of the second electrode plate 120. Each of the two second detecting device 300 is located between a position of the n-th turn of the second electrode plate 120 and a position of the separator 22 adjacent thereto, the second detecting device 200 is configured to monitor the expansion force of the planar structure 140 of the n-th turn of the second electrode plate 120.

Two second detecting devices 300 are respectively disposed in alignment on two sides of the planar structure 140 of any two turns, any three turns or more turns of the second electrode plate 120. For example, two second detecting devices 300 are respectively disposed in alignment on two sides of the planar structure 140 of the n-th turn of the second electrode plate 120, and two second detecting devices 300 are respectively disposed in alignment on two sides of the planar structure 140 of the m-th turn of the second electrode plate 120. The n-th turn of second electrode plate 120 and the m-th turn of second electrode plate 120 can be disposed adjacent to each other or can be spaced apart by several turns of the second electrode plate. Two second detecting devices 300 are respectively disposed in alignment on two sides of one of two planar structures 140 of the n-th turn of the second electrode plate 120, or two second detecting devices 300 are respectively disposed in alignment on two sides of each of two planar structures 140 of the n-th turn of the second electrode plate 120. The second detecting device 300 is located between a position of the n-th turn of the second electrode plate 120 and a position of the separator 22 adjacent thereto, and the second detecting device 300 is configured to monitor the expansion force of the planar structure 140 of the n-th turn of the second electrode plate 120. Two second detecting devices 300 are respectively disposed in alignment on two sides of one of two planar structures 140 of the m-th turn of the second electrode plate 120, or two second detecting devices 300 are respectively disposed in alignment on two sides of each of two planar structures 140 of the m-th turn of the second electrode plate 120. The second detecting device 300 is located between a position of the m-th turn of the second electrode plate 120 and a position of the separator 22 adjacent thereto, the second detecting device 300 is configured to monitor the expansion force of the planar structure 140 of the m-th turn of the second electrode plate 120.

Two second detecting device 300 are respectively disposed in alignment on two sides of the planar structure 140 of each turn of the second electrode plate 120. Two second detecting devices 300 are respectively disposed in alignment on two sides of one of two planar structures 140 of each turn of the second electrode plate 120, or two second detecting devices 300 are respectively disposed in alignment on two sides of each of two planar structures 140 of each turn of the second electrode plate 120. The planar structure 140 of each turn of the second electrode plate 120 is provided with the second detecting device 300, so as to monitor the expansion force changes of each turn of the second electrode plate 120, so that the monitoring is more comprehensive and the detection results are accurate.

It can be understood that by detecting the expansion force of the planar structure 140 and the cambered surface structure 150 of the second electrode plate 120 in real time, the monitoring position is comprehensive, so that the changes in the expansion force of the cell can be comprehensively tested, and the monitoring results are more accurate.

In some embodiments, as shown in FIG. 2, any turn of the second electrode plate 120 such as the n-th turn of the second electrode plate 120, the planar structure 140 of the n-th turn of second electrode plate 120 includes a first plane 141 and a second plane 142 disposed oppositely. The first plane 141 is provided with a plurality of second detecting devices 300, such as three second detecting devices 300. The three second detecting devices 300 are respectively disposed in the positions close to two ends and the middle of the first plane 141. The second detecting devices 300 on the second plane 142 are disposed in alignment with the second detecting devices 300 on the first plane 141.

By disposing the second detecting devices 300 at different positions in the plane where the planar structure 140 of the second electrode plate 120 is located, the expansion force monitoring of different positions of the second electrode plate 120 is achieved. The more monitoring points, the more comprehensive the cell monitoring will be. The second detecting devices 300 are respectively disposed at three positions, that is, the upper, middle and lower positions on the same plane, the arrangement of the monitoring points is reasonably, so that the monitoring results are accurate.

Based on the above implementations, referring to FIG. 2 and FIG. 3, the first detecting device 200 and the second detecting device 300 are disposed on the same turn of the second electrode plate 120. For example, two second detecting devices 300 are respectively disposed on two sides of the planar structure 140 of the n-th turn of the second electrode plate 120, and two first detecting devices 200 are respectively disposed on two sides of the cambered surface structure 150 of the n-th turn of the second electrode plate 120. The first detecting device 200 and the second detecting device 300 are disposed on the second electrode plate 120 of the same turn, and there are more monitoring points on the second electrode plate 120 of the same turn, so that the monitoring results of this turn of the second electrode plate 120 are more accurate.

As a variation, as shown in FIG. 4, the first detecting device 200 and the second detecting device 300 are disposed on different turns of the second electrode plate 120. For example, two second detecting devices 300 are disposed on two sides of the planar structure 140 of the n-th turn of the second electrode plate 120, and two first detecting devices 200 are disposed on two sides of the cambered surface structure 150 of the m-th turn of the second electrode plate 120. The first detecting device 200 and the second detecting device 300 are disposed on the second electrode plate 120 in different turns. For the entire cell, the first detecting device 200 and the second detecting device 300 are reasonably arranged, so as to take into account the changes of expansion force of different turns and different positions, and the monitoring points are comprehensive.

In some implementations, the second electrode plate 120 is wound into multiple turns from the inside to the outside, such as N turns of the second electrode plate 120, which from inside to the outside includes: the first turn of the second electrode plate 120, the second turn of the second electrode plate 120, ..., to the N-th turn of the second electrode plate 120 in sequence. The first detecting device 200 is disposed on any turn of the second electrode plate 120 close to the inner side, for example, the first detecting devices are disposed on two sides of the cambered surface structure 150 close to the first turn of the second electrode plate 120 or the second turn of the second electrode plate 120.

And/or, the first detecting device 200 is disposed on any turn of the second electrode plate 120 close to the middle portion, such as the N/2-th second electrode plate 120, if N/2 is not an integer, the two integers closest to N/2 are selected, and the first detecting device 200 is disposed on the turn of the second electrode plate 120 where the two integers are located.

And/or, the first detecting device 200 is disposed on any turn of the second electrode plate 120 close to the outer side, for example, two first detecting devices are disposed on two sides of the cambered surface structure 150 of the N-th turn or the (N-1)th turn of the second electrode plate 120.

It can be understood that, along the thickness direction, the first detecting devices 200 are spaced apart on the turns of the second electrode plate 120 close to the inner side, the middle portion, and the outer side, which can evaluate the overall changes of the expansion force of the cell, and take into account the operability of the processing technology for installing the first detecting device 200 on the cell 20 and the reliability of the monitoring results.

Referring to FIG. 5, FIG. 5 is an exploded schematic diagram of a cell and a housing according to some embodiments of the present disclosure.

In some embodiments, the cell further includes a housing 10. The housing has an accommodating space, the cell 20 is installed in the housing 10. The housing 10 is made of aluminum material. The housing 10 and the cell 20 form a battery cell. At least one cell 20 may be disposed in the housing 10, such as two cells 20. Each of two sides of each cell 20 is provided with a plurality of third detecting devices 400. The third detecting device 400 is located between the cell 20 and the housing 10, and the third detecting device 400 is configured to monitor the expansion force at corresponding positions of the cell 20.

By disposing the third detecting device 400 on two sides of the cell 20, the changes in the expansion force of the cell 20 can be monitored, and further, combined with the changes in the expansion force of the second electrode plate 120, the monitoring is comprehensive, so that the difference in expansion force performance between the inside and outside of the battery can be identified, which is conducive to the simulation modeling to achieve the prediction of the expansion force and battery life.

Based on the above implementations, a plurality of third detecting devices 400 are disposed on the same side surface of the cell 20, and the plurality of third detecting devices 400 are respectively disposed at the positions close to two ends and the middle of the cell 20.

By disposing the third detecting devices 400 at different positions in the plane of each side of the cell 20, the expansion force monitoring of different positions of the cell 20 is achieved. The more monitoring points, the more comprehensive the cell monitoring will be. The third detecting devices 400 are respectively disposed at three positions, that is, the upper, middle and lower positions on the same plane, the arrangement of the monitoring points is reasonably, so that the monitoring results are accurate. Along the extending direction of the planar structure 140, the third detecting device 400 can also be located at different positions. The monitoring points are scattered, and there are a large number of monitoring positions, therefore, the monitoring results are accurate.

Based on the above implementations, the first detecting device 200 includes at least one of a displacement sensor and a pressure sensor.

The second detecting device 300 includes at least one of a displacement sensor and a pressure sensor.

The third detecting device 400 includes at least one of a displacement sensor and a pressure sensor.

The pressure sensor described above may be a strain type pressure sensor, a piezoresistive pressure sensor, or a piezoelectric pressure sensor. The displacement sensor described above can be an inductive displacement sensor, a capacitive displacement sensor, or a posentiometric displacement sensor.

In some embodiments, as shown in FIG. 1, the first detecting device 200 is a coating sensor. The cambered surface structure 150 includes a first cambered surface 151 and a second cambered surface 152 disposed oppositely. The coating sensor is respectively coated on the first cambered surface 151 and the second cambered surface 152 of the cambered surface structure 150 of the second electrode plate 120. The coating sensor can be coated on the whole of the first cambered surface 151 and the second cambered surface 152, or can be coated on the upper or lower half of the first cambered surface 151 and the second cambered surface 152. The thickness variation of the coating sensor is in the micrometer range, the coating sensor occupies a small space and has high compatibility with the cambered surface structure 150 of the second electrode plate 120, and thus having high monitoring accuracy.

The second detecting device 300 described above is a coating sensor or a probe sensor.

The third detecting device 400 described above is a coating sensor or a probe sensor.

In some embodiments, the first detecting device 200 includes a probe and a magnet. The magnet is disposed on the probe, each of the probe and the magnet is provided with an insulating layer. Two magnets of two first detecting device 200 located on two sides of the same position of the second electrode plate 120 have opposite polarities.

In some implementations, the second detecting device 300 includes a probe and a magnet. The magnet is disposed on the probe, each of the probe and the magnet is provided with an insulating layer. Two magnets of wo second detecting device 300 located on two sides of the same position of the second electrode plate 120 have opposite polarities.

It can be understood that one side of each of the probes of the first detecting device 200 and the second detecting device 300 is coated with a magnet, and the outer surfaces of the probe and magnet are coated with an insulating layer to play the role of insulation protection and avoid short circuiting of the cell. The magnets of the first detecting device 200 or the second detecting device 300 located on two sides of the same position of the second electrode plate 120 are designed to have opposite polarities, then the probes of the two first detecting devices 200 or the two second detecting devices 300 are aligned and attracted to each other under the action of magnetic force, so that the probes are fixed to prevent misalignment of the probes, thereby avoiding situations of monitoring errors, and improving the accuracy of expansion force monitoring.

In addition, the cell of the present disclosure can further be connected to a control system. The control system includes a controller. The first detecting device 200, the second detecting device 300 and the third detecting device 400 are respectively connected to the controller. The controller is configured to receive the expansion force parameters sent by the first detecting device 200, the second detecting device 300 and the third detecting device 400 in real time, and to perform real-time data analysis on the expansion force parameters and issue alarm information or prompt information.

The controller is further configured to establish a correspondence model of the electrode plate-cell-expansion force based on the expansion force parameters, and output the prediction results of the expansion force. For example, battery life prediction or design guidance of the battery structural strength can be output based on the prediction results of the expansion force.

The cell of the embodiments can be used in the battery. Referring to FIG. 1 and FIG. 2, the cell described above includes electrode plates 21, a separator 22 and a plurality of first detecting devices such as the first detecting devices 200. The electrode plate 21 includes a first electrode plate 110 and a second electrode plate 120. The separator 22 is disposed between the first electrode plate 110 and the second electrode plate 120. The separator 22 is configured to separate the first electrode plate 110 and the second electrode plate 120, and the first electrode plate 110, the second electrode plate 120 and the separator 22 are disposed in a wound manner. The first electrode plate 110, the second electrode plate 120 and the separator 22 are composited in advance, and two sides of each of the first electrode plate 110, the second electrode plate 120 and the separator 22 are aligned with each other and wound to form N turns of the first electrode plate 110, N turns of the second electrode plate 120 and N turns of the separator 22, and N is an integer 2 greater than 1. Each turn of the first electrode plate 110, each turn of the second electrode plate 120 and each turn of the separator 22 respectively includes two planar structures 140 and two cambered surface structures 150. The two planar structures 140 of each turn of the first electrode plate 110, each turn of the second electrode plate 120 and each turn of the separator 22 are respectively disposed in parallel and the two cambered surface structures 150 of each turn of the first electrode plate 110, each turn of the second electrode plate 120 and each turn of the separator 22 are respectively disposed oppositely. Two cambered surface structures 150 are disposed at two ends of the planar structures 140, and the two cambered surface structures 150 are connected with the two planar structures 140 to form a runway shape. Two first detecting devices 200 are respectively disposed in alignment on two sides of the cambered surface structure 150 of at least one turn of the second electrode plate 120. The first detecting device 200 is located between a position of the second electrode plate 120 and the position of the separator 22 adjacent thereto, the first detecting device 200 is configured to monitor the expansion force of the cambered surface structure 150 of the corresponding second electrode plate 120.

In the cell and the battery provided by the embodiments of the present disclosure, the cell includes a main body and a plurality of first detecting devices. The main body is formed by winding a first electrode plate, a second electrode plate and a separator. Each turn of the first electrode plate, each turn of the second electrode plate and each turn of the separator respectively includes planar structures and cambered surface structures connected with each other. The cambered surface structure of the second electrode plate such as the negative electrode plate, is subject to uneven stress, and at which lithium precipitation is prone to occur during the battery charging and discharging cycle. By respectively disposing two first detecting devices in alignment on two sides of the cambered surface structure of at least one turn of the second electrode plate, the first detecting device can detect the expansion force at the cambered surface structure of the second electrode plate, thereby overcoming the problem of inaccurate monitoring results of the existing battery expansion force, and detecting the expansion force at the most easily deformed position inside the battery, so that the test results are accurate.

### Embodiment Three

In the existing technology, the battery temperature is generally monitored outside the cell, and an early warning is provided when the battery temperature is abnormal. Since there is no recorded data of the entire process from the moment when the short circuiting initially occurs inside the battery to the occurrence of safety accident, it is impossible to conduct in-depth analysis of battery problems.

Inside the battery, a battery separator is generally disposed between the positive electrode plate and the negative electrode plate to isolate the positive electrode and negative electrode and prevent electrons in the battery from passing freely, while allowing ions in the electrolyte to pass freely between the positive electrode and negative electrode.

Therefore, damage or holes in the separator will cause the positive electrode plate and negative electrode plate inside the battery to be connected, leading to short circuiting inside the battery and causing safety accidents such as thermal runaway and fire. Generally, in the prior art, the battery temperature is only monitored from the outside of the battery, and an early warning is provided when the battery temperature is abnormal. However, when the monitoring device outside of the battery detects that the battery temperature is abnormal, there are already serious problems inside the battery. Therefore, existing solution cannot provide early warning before thermal runaway or fire occurs in the battery, and it also lacks process data of short circuiting inside the battery.

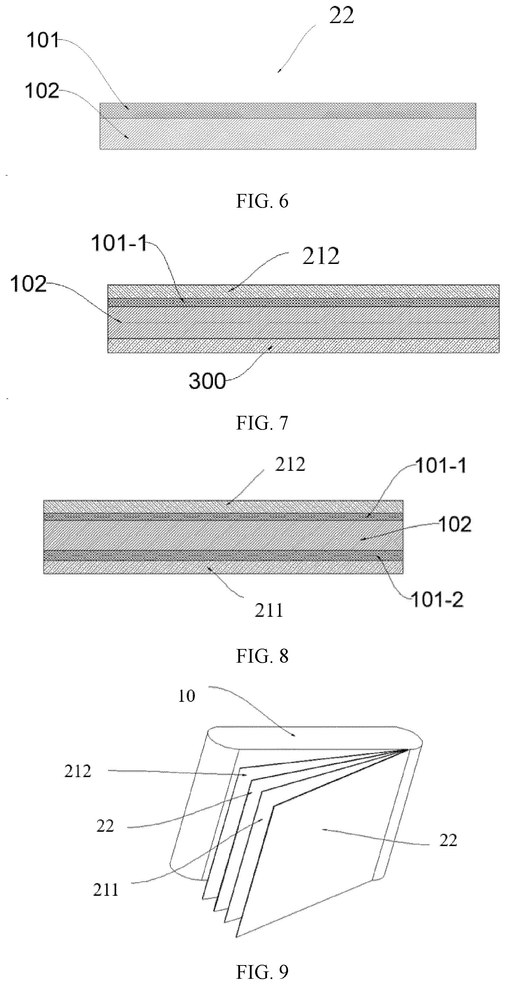

As shown in FIG. 6 to FIG. 8, this embodiment provides a battery separator 22 which is disposed inside the battery and is configured to separate adjacent positive electrode plate 211 and negative electrode plate 212 inside the battery. The battery separator 22 includes a base film 102 and the sensing structure described above. The sensing structure is a sensor layer 101, the sensor layer 101 is disposed on the surface of at least one side of the base film 102, the sensor layer 101 includes a plurality of sensors distributed on the same surface of the base film 102. The sensor is configured to monitor the changing data of the base film 102 and send the changing data to an external receiving device.

It should be noted that the above changing data includes the temperature of the base film 102 and/or the resistance of the base film 102.

The sensors constituting the sensor layer 101 described above are nanoscale sensors.

It can be understood that since the sensor layer 101 is disposed on the surface of at least one side of the base film 102, that is, the sensor layer 101 covers the surface where the base film is in contact with the positive electrode plate 211, or where the base film is contact with the negative electrode plate 212, and monitors the temperature and resistance of the base film 102 in real time. Therefore, when the base film 102 is damaged or broken, the changes in temperature and resistance at the damaged position of the base film 102 can be detected in time, so that the temperature and resistance of the damaged position of the base film 102 are sent to the receiving device when the base film 102 is damaged or broken. Through the real-time monitoring of the temperature and resistance of the base film 102 through the sensor layer 101, the cause of the problem can be analyzed based on the real-time monitoring data when analyzing and researching the battery problems. At the same time, since the sensor layer 101 is disposed on the surface of the base film 102, the base film 102 can be monitored in real time, abnormal positions can be accurately located when the base film 102 is damaged or broken.

In some embodiments, a plurality of sensors in the sensor layer 101 are spaced apart.

In some embodiments, the plurality of sensors in the sensor layer 101 are evenly distributed.

In some embodiments, the plurality of sensors in the sensor layer 101 are closely arranged.

In some embodiments, the base film 102 has a first surface configured to be contact with the negative electrode plate 212, the sensor layer 101 includes a first sensor layer 101-1, and the first sensor layer 101-1 is disposed on the first surface.

It should be noted that since the battery is generally in a fully charged state when a safety accident occurs, that is, the negative electrode is charged, and at the same time, the negative electrode structure is less stable than the positive electrode structure. Therefore, when the sensor layer 101 is only provided on one surface of the base film 102, priority is given to the surface of the base film 102 in contact with the negative electrode plate 212, so that damage to the base film 102 can be monitored promptly and accurately.

In some embodiments, the base film 102 has a second surface configured to be contact with the positive electrode plate 211, the sensor layer 101 further includes a second sensor layer 101-2, and the second sensor layer 101-2 is disposed on the second surface.

That is, two surfaces of the base film 102 that are respectively in contact with the negative electrode plate 212 and the positive electrode plate 211 are respectively provided with the first sensor layer 101-1 and the second sensor layer 101-2.

It can be understood that by disposing sensor layers 101 on two surfaces of the base film 102, when one sensor layer 101 fails, the other sensor layer 101 can work normally. In addition, the monitoring data of the two sensor layers 101 can be compared to judge the working condition of the base film 102.

In some other embodiments, only one sensor layer 101 is disposed on the base film 102, and the sensor layer 101 is the second sensor layer 101-2 disposed on the second surface.

In some embodiments, the positions of the sensors in the first sensor layer 101-1 are in one-to-one correspondence with the positions of the sensors in the second sensor layer 101-2.

It can be understood that in order to determine whether the first sensor layer 101-1 and the second sensor layer 101-2 are in a normal working state, the monitoring information monitored by the two sensor layers can be compared. Based on this, the position of each sensor in the second sensor layer 101-2 is corresponded to the position of each sensor of the first sensor layer 101-1, thereby ensuring that the comparison data of the two sensor layers are in the same condition and reducing the influence of external factors as much as possible.

It should be noted that when the first sensor layer 101-1 and the second sensor layer 101-2 are simultaneously disposed on the base film 102, the sensors used in the first sensor layer 101-1 and the second sensor layer 101-2 are of the same type.

In some embodiments, when the first sensor layer 101-1 and the second sensor layer 101-2 are simultaneously disposed on the base film 102, the number of sensors in the first sensor layer 101-1 is the same as the number of sensors in the second sensor layer 101-2.

In some embodiments, the sensor layer 101 completely covers the surface of at least one side of the base film 102. That is, when the first sensor layer 101-1 is disposed on the first surface of the base film 102, the first sensor layer 101- completely covers the first surface. When the second sensor layer 101-2 is disposed on the second surface of the base film 102, the second sensor layer 101-2 completely covers the second surface.

It can be understood that completely covering the first surface or the second surface can ensure that the surface of the base film 102 in contact with the positive electrode plate 211 or the negative electrode plate 212 is provided with the sensor layer 101, so that the entire surface of the base film 102 in contact with the electrode plate is monitored by the sensor layer 101, thereby ensuring that the status of the entire battery separator is monitored.

In some embodiments, the sensor layer 101 includes a prefabricated coating and a plurality of sensors distributed in the prefabricated coating, and the plurality of sensors are evenly distributed in the prefabricated coating.

It should be noted that the sensor layer 101 is composed of a prefabricated coating material on the surface of the base film 102 and a plurality of sensors. The plurality of sensors and the prefabricated coating material are mixed together and coated on the surface of the base film 102 to form the sensor layer 101.

It can be understood that since the sensors are located in the prefabricated coating formed of the prefabricated coating material, a protective surface will be formed for the sensors therein, thereby protecting the sensors and improving the accuracy of the sensors in monitoring the temperature and resistance of the base film 102.

In some embodiments, the base film 102 may be a single-layered structure, that is, the base film 102 is made of one preparation material to form a single-layered structure.

In some other embodiments, the base film 102 may be a multi-layered structure, that is, the base film 102 is made of one or more preparation materials to form a multi-layered stacked structure, and the sensor layer 101 is disposed on the surface of the outermost layer of the base film 102.

In some embodiments, the sensors in the first sensor layer 101-1 and the second sensor layer 101-2 are all electromagnetic wave sensors, that is, they all transmit monitoring information through electromagnetic wave.

As shown in FIG 9, in some embodiments, the present disclosure further proposes a battery. The battery includes a housing 10, a positive electrode plate 211, a negative electrode plate 212 and a battery separator 22. The housing 10 has an accommodating space, the positive electrode plate 211 is disposed in the accommodating space, the negative electrode plate 212 is also disposed in the accommodating space and is located on one side of the positive electrode plate 211. The battery separator 22 is also disposed in the accommodating space and is located between the positive electrode plate 211 and the negative electrode plate 212. One side of the battery separator 22 is in contact with the positive electrode plate 211, and the other side of the battery separator 22 is in contact with the negative electrode plate 212, that is, the positive electrode plate 211 and the negative electrode plate 212 in the housing 10 are separated by the battery separator 22.

It can be understood that since the battery uses the battery separator 22 in any one of the embodiments described above, the battery has at least some or all of the beneficial effects of the battery separator 22 in any one of the embodiments described above, which will not be described again herein.

In one embodiment, a positive pole and a negative pole are further provided inside the housing 10. The edges of the positive pole and the negative pole are both provided with plastics. The sensors in the first sensor layer 101-1/the second sensor layer 101-2 on the battery separator 22 transmit the monitoring information to the plastics of the positive pole or negative pole through electromagnetic waves, and then the monitoring information is transmitted to the external receiving device.

It can be understood that lossless transmission of monitoring information can be achieved through the plastics on the edges of the positive pole or the negative pole, thereby improving the accuracy of monitoring.

In some embodiments, the present disclosure further proposes a battery monitoring system including a receiving device and a battery. The receiving device is connected to the battery. The receiving device is configured to receive changing data sent by the sensor layer 101 and convert the changing data into a status signal of the base film 102.

It can be understood that since the battery monitoring system also uses the battery separator 22 in any one of the embodiments described above, the battery has at least some or all of the beneficial effects of the battery separator 22 in any one of the embodiments described above, which will not be described again herein.

In some embodiments, the battery separator 22 has a first sensor layer 101-1 in contact with the negative electrode plate 212 and a second sensor layer 101-2 in contact with the positive electrode plate 211. The receiving device is configured to process the signals of the sensors in the first sensor layer 101-1 and in the second sensor layer 101-2 of which the positions are in one-to-one correspondence.

It should be noted that the receiving device being configured to process the signals of the sensors in the first sensor layer 101-1 and in the second sensor layer 101-2 of which the positions are in one-to-one correspondence includes: the signal of a sensor in the first sensor layer 101-1 and a signal of a sensor in the second sensor layer 101-2 of which the position is corresponded to the position of the sensor in the first sensor layer are compared and filtered by the receiving device. When a problem occurs in any one of the two sensors of which the positions are corresponded to each other, it can still obtain the monitoring information of the corresponding position, thereby ensuring the reliability of the data.

That is, the receiving device compares the changing data of the sensor in the first sensor layer 101-1 with that of the sensor in the second sensor layer 101-2 for the same position in the base film 102, and determines whether the changing data sent by the two sensors is abnormal, thereby improving the accuracy of status monitoring of the base film 102.

In some embodiments, the battery monitoring system further includes a battery management system (BMS), and the receiving device is connected to the BMS. The receiving device sends the received status signal of the base film 102 to the BMS, and implements a linkage early warning with the BMS.

In some embodiments, the status signal of the base film 102 includes position information of each position in the base film 102 and temperature information of the corresponding position.

In some embodiments, the status signal of the base film 102 includes position information of each position in the base film 102 and resistance information of the corresponding position.

In some other embodiments, the status signal of the base film 102 includes position information of each position in the base film 102 as well as temperature information and resistance information of the corresponding position.

Embodiments of the present disclosure provide a separator, the separator is composed of a base film and a sensor layer located on the surface of at least one side of the base film. The sensor layer is formed by a plurality of sensors distributed on the same surface of the base film. The sensors are configured to monitor the changing data of the base film, and send the monitored changing data to the external receiving device, the changing data includes the temperature and/or resistance of the base film. When abnormal situation such as damage or break is occurred in the separator, the temperature and resistance of the corresponding positions of the base film will begin to change. The sensor layer covering the surface of the base film can monitor the resistance and temperature of positions of the base film, so as to issue an alarm in time when the base film is damaged or broken. Through the real-time monitoring of the temperature and resistance of the base film through the sensor layer, the cause of the problem can be analyzed based on the real-time monitoring data when analyzing and researching the battery problems. At the same time, since the sensor layer is disposed on the surface of the base film, the base film can be monitored, abnormal positions can be accurately located when the base film is damaged or broken.

### Embodiment Four

By monitoring the internal temperature of the battery in real time, the working condition of the battery can be effectively determined, thereby providing early warning of abnormal temperature changes and avoiding the occurrence of thermal runaway. In existing internal temperature monitoring technologies of the battery, the use of intrusive external temperature sensing devices is required, which not only affects battery performance but also causes large error problems.

Therefore, how to efficiently detect the internal temperature of the battery without affecting the battery performance is an urgent technical problem that needs to be solved by those skilled in the art.

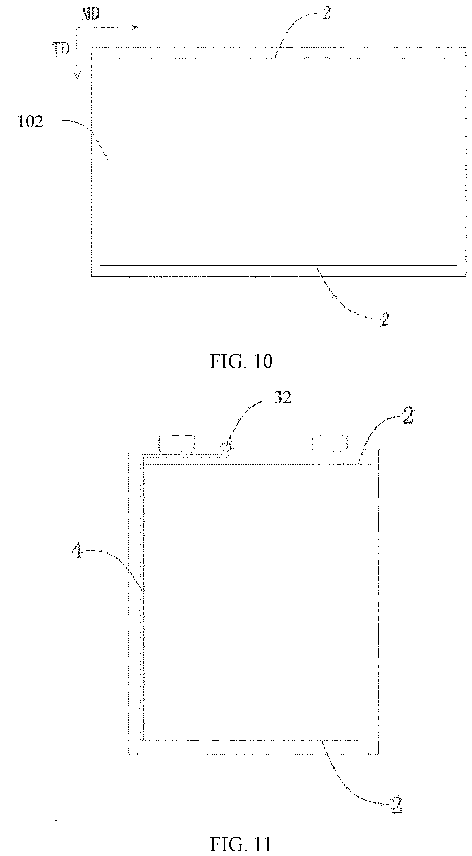

Referring to FIG. 10, the embodiments provide a separator 22 provided with a temperature sensing wire, the separator includes the base film 102 and the sensing structure as described above. The sensing structure is the temperature sensing wire 2 formed on the top and/or bottom of the base film 102 in the thickness direction and configured to detect the temperature of the base film 102. The temperature sensing wire 2 is disposed on the upper side and/or lower side in the width direction of the base film 102 and close to the edges of the base film 102; and the temperature sensing wire extends along the length direction of the base film 102. Preferably, the temperature sensing wires 2 are formed on the top and bottom of the base film 102 in the thickness direction at the same time, and the temperature sensing wires 2 are respectively disposed on the upper side and the lower side of the base film 102 in the width direction.

The machine direction (MD) in FIG. 10 is the length direction of the base film 102, and the transverse direction (TD) is the width direction of the base film 102.

Therefore, by simultaneously forming the temperature sensing wires 2 on the top and bottom of the base film 102 in the thickness direction, the temperature changes of the base film 102 can be detected more accurately, thereby improving the accuracy of temperature detection of the base film 102. It is apparent that in other embodiments, the temperature sensing wire 2 can also be formed only on the top or bottom of the base film 102 in the thickness direction, which is not limited thereto.

In addition, in this embodiment, two temperature sensing wires 2 are provided and are respectively located on the upper side and lower side of the base film 102 in the width direction. It should be noted that whether the temperature wire 2 is disposed on the upper side and/or lower side of the base film 102 in the width direction depends on the distribution position of the tabs on the electrode plate. If the tabs are all distributed on the upper side of the electrode plate in the width direction, then the temperature sensing wire 2 can be correspondingly disposed on the upper side of the base film 102 in the width direction. If the tabs on the electrode plate are all distributed on the lower side of the electrode plate in the width direction, then the temperature sensing wire 2 only needs to be correspondingly disposed on the lower side of the base film 102 in the width direction. If the tabs on the electrode plate are respectively distributed on the upper side and the lower side of the electrode plate in the width direction, correspondingly, the temperature sensing wires 2 need to be disposed on the upper side and the lower side of the base film 102 in the width direction.

In addition, it should be noted that a plurality of temperature sensing wires 2 can also be provided, and they are respectively located on the upper side and/or lower side of the base film 102 in the width direction, thereby improving the accuracy of temperature monitoring of the separator, and which are not limited herein.

Therefore, by disposing the temperature sensing wire 2 on the base film 102, the temperature changes of the separator can be detected, so as to realize real-time detection of the internal operating temperature of the battery, thereby providing timely feedback on abnormal conditions of the battery temperature and preventing thermal runaway of the battery. In addition, the temperature sensing wire 2 is disposed at the edge of the base film 102 in the width direction, which not only facilitates heat transfer to the outer end of the battery, but also avoids increasing the transmission internal resistance of the battery and preventing impact on the cell. In addition, the temperature sensing wire 2 extends along the length direction of the base film 102 instead of extending along the width direction, which is also more convenient for the subsequent cutting process of the separator.

Further, the temperature sensing wire 2 is disposed at the junction where the base film 102 and the positive electrode plate and/or the negative electrode plate are overlapped. The base film 102 has a porous and three-dimensional structure, and the width of the temperature sensing wire 2 is smaller than the average pore size of the base film 102 after stretching. Preferably, the width of the temperature sensing wire 2 is less than 1µm.

Therefore, the width of the temperature sensing wire 2 is smaller than the average pore size of the base film 102 after stretching, so that the porous structure of the base film 102 will not be blocked, thereby ensuring the porosity of the separator and avoiding affecting the penetration of the electrolyte.

In some embodiments, the temperature sensing wire 2 is made of silica ceramic composite material.

Referring to FIG. 11, moreover, the separator provided with the temperature sensing wires according to the embodiments of the present disclosure can be applied in a battery. The battery includes a positive electrode plate, a negative electrode plate and the separator in any one of the embodiments described above. The positive electrode plate, the negative electrode plate and the separator can form the battery through a lamination process or a winding process. A chip 32 is further disposed on the top of the battery, and the chip 32 is electrically connected to the temperature sensing wire 2 through a connecting wire 4. Preferably, the connecting wire 4 is led out from the side portion of the battery. In addition, a rectangular window (not shown in the figure) is disposed at the position of the battery corresponding to the position of the chip 32. Preferably, the side length of the window is 1 mm to 3mm.

Therefore, during assembly, the connecting wire 4 is used to lead out a temperature transmission path on the side portion of the battery, so that the temperature signal can be transmitted to the chip 32, and a window is disposed on the battery to facilitate the user to observe the temperature value.

It should be noted that in some embodiments, the position of the window can expose the temperature display module on the chip 32 to facilitate the user to observe the temperature value. It is apparent that in other embodiments, a temperature display device can further be disposed independently at the position of the window, and the chip 32 is connected to the temperature display device through wired connection (electrical wire) or wireless connection (bluetooth, wifi module) and the like, thereby realizing monitoring of temperature values of the user, and which are not limited herein.

In some embodiments, the connecting wire 4 is a filament made of metal internally and insulating material externally.

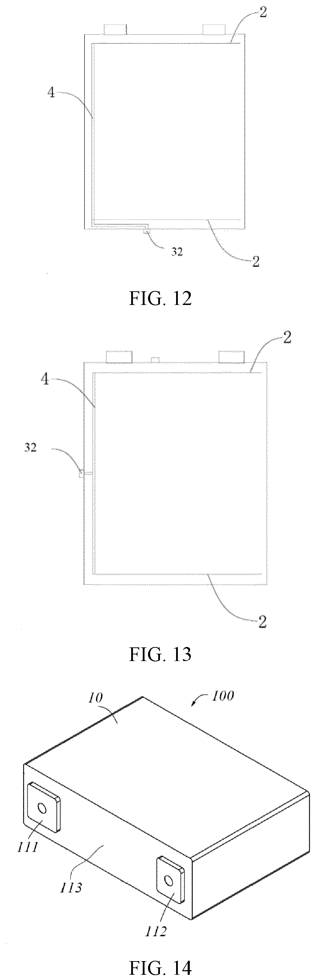

It is apparent that the chip 32 can also be disposed at the bottom portion or side portion of the battery according to actual needs, as shown in FIG. 12 and FIG. 13, and which are not limited herein.

In addition, the preparation method of the separator according to some embodiments of the present disclosure specifically includes the following steps.

Step s1: raw materials such as polyethylene (PE) or polypropylene (PP) and additives according to a formula are preprocessed and then transported to an extrusion system.

Step s2: the preprocessed raw materials are melted and plasticized in the extrusion system, and then a melt separator is extruded from a die head, and the melt separator forms a base film 102 with a specific crystal structure after tape casting.

Step s3: the base film 102 is heat-treated to obtain a hard elastic film.

Step s4: the hard elastic film is cold stretched and hot stretched to form a nano-porous film.

Step s5: the temperature sensing wire is processed on the finished base film and dried, and the processing method can be any one of physical/chemical vapor deposition, sol-gel method, and electrospinning.

Step s6: the nano-microporous film is cut into finished films according to customer specifications.

In summary, the separator provided with the temperature sensing wire, the battery and the preparation method of the separator according to the embodiments of the present disclosure have the following beneficial effects.

(One) In the separator provided with the temperature sensing wire 2 of the present disclosure, by disposing the temperature sensing wire 2 on the base film 102 integrally, the temperature changes of the separator can be detected, so as to realize real-time detection of the internal operating temperature of the battery, thereby providing timely feedback on abnormal conditions of the battery temperature and preventing thermal runaway of the battery.

(Two) In the separator provided with the temperature sensing wire 2 of the present disclosure, the width of the temperature sensing wire 2 is smaller than the average pore size of the base film 102 after stretching, so that the porous structure of the base film 102 will not be blocked, thereby ensuring the porosity of the base film 102 and avoiding affecting the penetration of the electrolyte.

(Three) In the separator provided with the temperature sensing wire 2 of the present disclosure, the temperature sensing wire 2 is disposed at the edges of the base film 102 in the width direction, which not only facilitates heat transfer to the outer end of the battery, but also avoids increasing the transmission internal resistance of the battery and preventing impact on the cell. In addition, the temperature sensing wire 2 extends along the length direction of the base film 102 instead of extending along the width direction, which is also more convenient for the subsequent cutting process of the separator.

(Four) In the battery of the present disclosure, during assembly, the connecting wire 4 is used to lead out a temperature transmission path on the side portion of the battery, so that the temperature signal can be transmitted to the chip 32, and a window is disposed on the battery to facilitate the user to observe the temperature value.

### Embodiment Five

In related art, a battery includes a housing and a cell. Status monitoring of the battery is inseparable from sensors. The sensors transmit the collected status parameters to the outside of the battery through signal wires. To this end, lead wire holes will be opened in the housing for signal wires to pass from the inside of the battery to the outside of the battery, thus sacrificing the strength of the housing and affecting the performance of the battery. For example, generally, necessary ports such as a positive terminal, a negative terminal and a safety valve port are disposed on the housing. The arrangement of these ports will already lead to a decrease in the strength of the housing.

The embodiments provide a battery, which can transmit sensing signals from inside the battery to a processing device located outside the battery without disposing lead wire holes, thereby addressing the technical problem of damaging the battery structure due to the installation of the sensors.

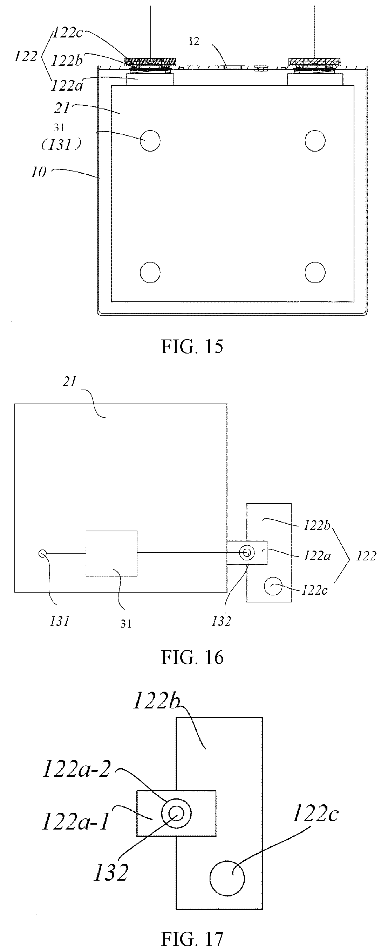

Referring to FIG. 14 and FIG. 15, the battery 100 includes a housing 10, a cell 20, an electrical transmission terminal 122 and the sensing structure described above, the sensing structure includes the sensor 31. The cell 20 is located in the housing. The cell 20 is configured to supply power to external electrical device. The sensor 31 is configured to detect the status of the cell 20 and/or the working conditions inside the battery to obtain status parameters. Specifically, the cell 20 includes the electrode plate 21. The electrical transmission terminal 122 is connected to the electrode plate 21. At least part of the electrical transmission terminal 122 is disposed outside the housing 10.

As shown in FIG 16, the sensor 31 includes a signal collecting terminal 131 and a signal output terminal 132. The signal collecting terminal 131 is disposed in the housing 10 and is configured to collect status parameters in the battery 100. The signal output terminal 132 is coupled and electrically connected to the electrical transmission terminal 122 to transmit the status parameters to the outside of the battery 100 through the electrical transmission terminal 122.

In the technical solution of the embodiments of the present disclosure, the signal collecting terminal 131 of the sensor 31 is disposed inside the housing 10 to collect the status parameters of the battery 100. Since the signal output terminal 132 is coupled and electrically connected to the electrical transmitting terminal 122, at least part of the electrical transmitting terminal 122 is disposed outside the housing 10, the status parameters are transmitted to the outside of the battery 100 through the electrical transmitting terminal 122, thereby addressing the technical problem of damaging the battery structure by punching lead wire holes on the housing 10 of the battery 100 due to the installation of the sensor 31.

Specifically, the present disclosure does not need to dispose the lead wire hole, so that the present disclosure does not only destroy the original appearance of the battery, but also does not need to adjust the air tightness of the battery, and further, it does not need to introduce other devices that affect the inherent performance of the battery, which are beneficial to improving the service life and performance of the battery 100.

It should be noted that the housing 10 includes a top cover 12 and a frame. The frame defines the accommodating cavity. The top cover 12 is disposed on and covers the opening of the accommodating cavity and seals the accommodating cavity. Generally, a port through which the electrical transmission terminal 122 passes is disposed on the top cover. The electrical transmission terminal 122 may be partially hidden in the housing 10 (i.e., part of the electrical transmission terminal is accommodated in the port and the other part is located outside the port); and the electrical transmission terminal 122 may be partially and completely exposed outside the housing 10. The electrode plate 21 is the core component of the cell 20. In order to ensure safety, the electrode plate 21 is located inside the housing 10. In the embodiments, the sensor 31 is disposed inside the accommodating cavity.

In some embodiments, as shown in FIG. 14, the port includes a positive port 111 and a negative port 112. The electrical transmission terminal 122 of the cell 20 is includes a positive transmission terminal (not labeled) and a negative transmission terminal (not labeled). The positive transmission terminal is disposed corresponding to the positive port 111, and the negative transmission terminal is disposed corresponding to the negative port 112.

As an alternative implementation of the above embodiment, as shown in FIG. 15 and FIG. 16, the electrical transmission terminal 122 includes a tab 122a and a pole 112c. The pole 112c is disposed on the top cover 12 of the housing 10, and at least part of the pole 112c is disposed outside the housing 10. The tab 122a is integrally disposed on the electrode plate 21. The pole 112c is electrically connected to the tab 122a. In some embodiments, as shown in FIG. 16, the signal output terminal 132 is coupled and electrically connected to the tab 122a. On the one hand, the signal collected by the sensor 31 can be transmitted to the outside of the battery through the tab 122a and the pole 112c. On the other hand, since the performance (capacity, voltage, etc.) signal of the battery itself is also transmitted through the pole 112c, the external data receiving and recording device can realize the simultaneous reception and display of the performance of the battery itself and the signals of the sensor 31. The data collected by the sensor 31 belongs to the same transmission path as the performance signals of the battery itself such as battery capacity and voltage, which facilitates linkage analysis of the data of the sensor 31 and the performance data of the battery itself during data analysis to achieve one-to-one correspondence.

In the battery of the embodiments of the present disclosure, by embedding the sensor inside the battery, the status parameters such as temperature, stress, and air pressure inside the battery can be sensitively monitored with limited impact on the electrochemical performance of the battery. These status parameters together with the performance parameters of the battery itself can be output to an external processing device through the pole. Therefore, the battery can be configured to implement real-time and corresponding monitoring and linkage analysis of the status parameters and the performance parameters of the battery itself, and to provide real-time warning of problems in the cells, which are conducive to increasing the safety and reliability of the battery. When an abnormity is occurred in the battery, the battery can quickly combine the status parameters obtained by the sensor with the performance parameters of the battery itself to provide feedback and alarm, so as to protect the life safety of the user.

In some embodiments, the electrical transmission terminal 122 may further include a flexible connecting plate 122b. The flexible connecting plate 122b is connected to the tab 122a. The pole 112c is connected to the flexible connecting plate 122b. Specifically, the flexible connecting plate 122b is welded to the tab 122a, and the pole 112c is welded to the flexible connecting plate 122b. The tab 122a, the flexible connecting plate 122b and the pole 112c are the structures of the cell 20 to realize electrical transmission with the external device. During discharging, the electric energy in the cell 20 is directed to external electrical device through the tab 122a, the flexible connecting plate 122b and the pole 112c. During charging, the external charging device stores the electric energy of the external charging device into the cell 20 through the pole 112c, the flexible connecting plate 122b and the tab 122a. At the same time, the signals collected by the sensor 31 can be transmitted to the outside of the battery through the tab 122a, the flexible connecting plate 122b and the pole 112c.

As an alternative implementation of the embodiments described above, as shown in FIG. 17, the tab 122a includes a current collector 122a-1 and an active layer 122a-2. The current collector 122a-1 is connected to the electrode plate 21 and the pole 122c respectively. In some embodiments, the current collector 122a-1 may be fixed at the edge of the electrode plate 21. The current collector 122a-1 may also be a sheet structure extending from the edge of the electrode plate 21. The active layer 122a-2 is disposed on the current collector 122a-1. The active layer 122a-2 is configured to reduce resistance and improve conductivity. In some embodiments, the active layer 122a-2 can also be configured to improve heat dissipation at the tab 122a and improve conductivity safety. In some embodiments, the active layer 122a-2 is made of nanoscale particles. Further, when the tab 122a is a positive tab 122a+, the active layer 122a-2 can be a graphene layer. When the tab 122a is a negative tab 122a-, the active layer 122a-2 may include a large amount of silicon-based negative active material, such as Si, Si-Me alloy, silicon oxide compound, and the like.

In some embodiments, the signal output terminal 132 is coupled and electrically connected to the area of the current collector 122a-1 where the active layer 122a-2 is disposed. By coupling and electrically connecting the signal output terminal 132 to the active layer 122a-2, the resistance of signal transmission can be reduced and the quality of signal transmission can be improved. In some embodiments, the signal output terminal 132 may be bonded within the area of the active layer 122a-2.

In some embodiments, at least a part of the current collector 122a-1 is provided with the active layer 122a-2, for example, more than half of the area is provided with the active layer 122a-2. The area of the current collector 122a-1 that is not provided the active layer 122a-2 is a foil-exposed area. The flexible connecting plate 122b is connected to the foil-exposed area of the current collector 122a-1, and is disposed in a misaligned manner with the signal output terminal 132. In some other embodiments, in order to improve the heat dissipation capability, each of two opposite sides of the current collector 122a-1 in the thickness direction is partially provided with the active layer 122a-2. The active layer 122a-2 can be disposed on the surface of the current collector 122a-1 by coating, deposition, electroplating, or other methods during the manufacture of the tab 122a. The current collector 122a-1 is generally a metal foil, such as copper, copper alloy, nickel, nickel alloy, and the like.

As an alternative implementation of the embodiments described above, the signal output terminal 132 is disposed integrally with the current collector 122a-1. In this embodiment, by disposing the signal output terminal 132 integrally with the current collector 122a-1, the connection reliability and the stability of signal transmission of the signal output terminal 132 are improved. Generally, during the manufacturing process of the tab 122a, the signal output terminal 132 can be welded on the area of the current collector 122a-1 provided with the active layer 122a-2.

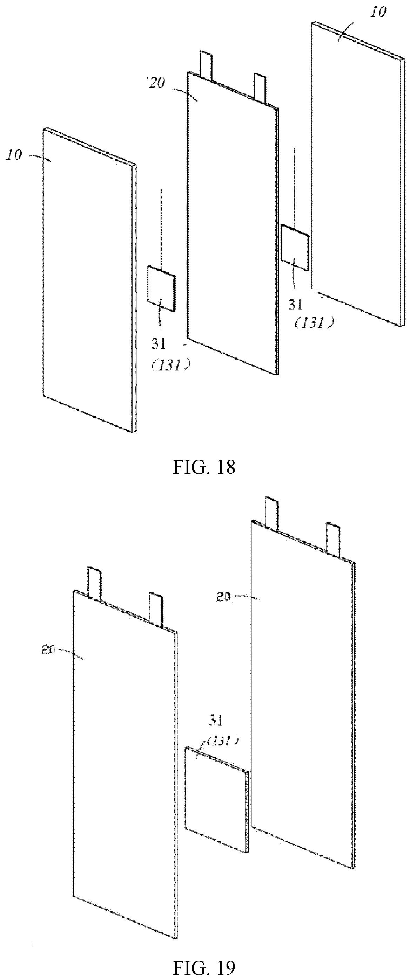

As an alternative implementation of the embodiments described above, as shown in FIG. 18, the signal collecting terminal 131 is disposed between the housing 10 and the cell 20. The housing 10 defines the accommodating cavity, and the cell 20 is placed in the accommodating cavity. There is a gap between the cell 20 and the housing 10. The signal collecting terminal 131 of the sensor 31 is disposed in the gap. For example, the signal collecting terminal 131 of the sensor 31 is disposed on the surface of the cell 20 facing the housing 10 or on the wall of the housing 10 facing the cell 20. In this way, the sensor 31 can collect the status parameters and/or environmental parameters in the battery 100.

As an alternative implementation of the embodiments described above, at least two cells 20 are provided, and the signal collecting terminal 131 is disposed between two adjacent cells 20. Through such an arrangement, the sensor 31 can collect the parameters in the cell 20 and determine the status of the cell 20. For example, as shown in FIG. 19, two cells 20 are provided. The signal collecting terminal 131 of the sensor 31 is disposed between the two cells 20. In other embodiments, there may be more cells 20, such as three, four or more. In these embodiments, the number of sensors 31 can be specifically determined. For example, in some embodiments, there are four cells 20, a signal collecting terminal 131 of a sensor 31 is disposed between the first cell and the second cell 20, and a signal collecting terminal 131 of a sensor 31 is disposed between the third cell and the fourth cell.

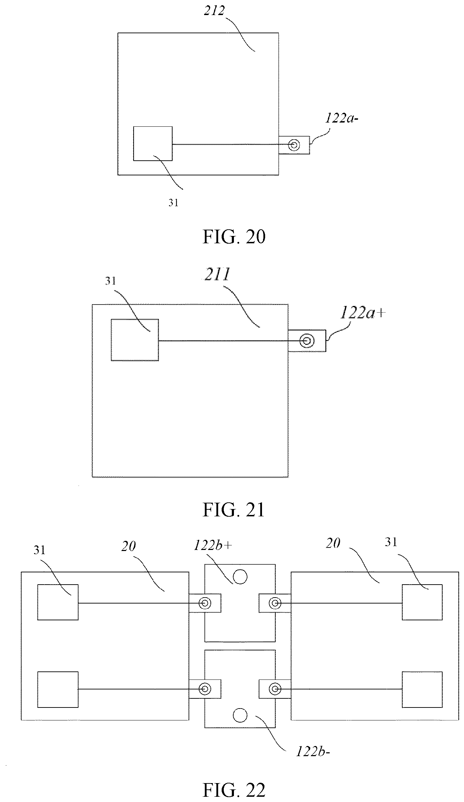

A plurality of cells 20 are provided. As shown in FIG. 20 and FIG. 21, each cell 20 has a positive tab 122a+ and a negative tab 122a-. The positive tabs 122a+ of the plurality of cells 20 share a positive flexible connecting plate 122b+ and the positive pole 112c to form the positive transmission terminal. The negative tabs 122a- of the plurality of cells 20 share a negative flexible connecting plate 122b- and the negative pole 112c to form the negative transmission terminal. The positive tab 122a+ is disposed on the positive electrode plate 211. The negative tab 122a is disposed on the negative electrode plate 212. For example, as shown in FIG. 22, the positive tabs 122a+ of two cells 20 share the same positive flexible connecting plate 122b+ and the positive pole 112c, and the negative tabs 122a- of two cells 20 share the same negative flexible connecting plate and the negative pole 112c. The sensor 31 arranged in the cell 20 can be disposed on any of the positive tabs 122a+ and the negative tabs 122a-, and the signals collected by the sensor 31 can be transmitted to the outside. When a plurality of sensors 31 are disposed between the cells 20, the signal collecting terminals 131 of the plurality of sensors 31 may be distributed on different positive tabs 122a+ and negative tabs 122a-.

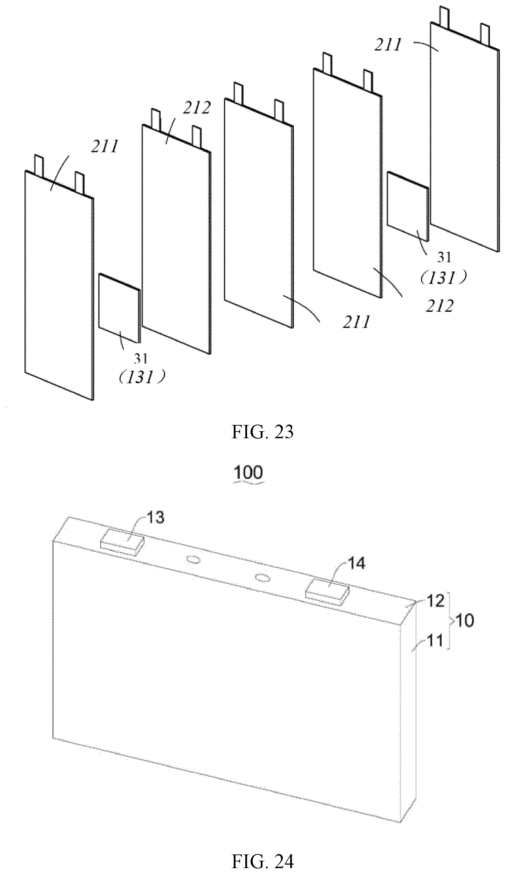

As an alternative implementation of the embodiments described above, as shown in FIG. 23, the electrode plate 21 includes positive electrode plates 211 and negative electrode plates 212, and each of the sensor 31 is disposed between the positive electrode plate 211 and the negative electrode plate 212. In some embodiments, the electrode plate 21 of the cell 20 includes the positive electrode plate 211 and the negative electrode plate 212. The cell 20 further includes a separator. The positive electrode plate 211 and the negative electrode plate 212 are separated by the separator. The signal collecting terminal 131 of the sensor 31 is disposed between the positive electrode plate 211 and the negative electrode plate 212, for example, it can be disposed on the positive electrode plate 211 or the negative electrode plate 212. With such arrangement, the internal status parameters and/or environmental parameters of the cells 20 in the battery 100 can be monitored.

Generally, each cell 20 includes a plurality of positive electrode plates 211 and negative electrode plates 212; and each of the positive electrode plates 211 and each of the negative electrode plates 212 are disposed alternately in sequence. Adjacent positive electrode plate 211 and negative electrode plate 212 are separated by the separator. For example, when the cell 20 is the cell, the cell includes from inner to outer in the radial directions: the first one of the positive electrode plates 211, the first one of the negative electrode plates 212, the second one of the positive electrode plates 211, the second one of the negative electrode plates 212, the third one of the positive electrode plates 211, the third one of the negative electrode plates 212, the fourth one of the positive electrode plates 211, and the fourth one of the negative electrode plates 212. The signal collecting terminal 131 of the sensor 31 can be disposed between the first one of the positive electrode plates 211 and the first one of the negative electrode plates 212, or between the first one of the negative electrode plates 212 and the second one of the positive electrode plates 211. Signal collecting terminals 131 of a plurality of sensors 31 can be provided inside the cell 20. For example, the signal collecting terminal 131 of one temperature sensor 31 can be disposed between the first one of the positive electrode plates 211 and the first one of the negative electrode plates 212. The signal collecting terminal 131 of the other temperature sensor 31 is disposed between the third one of the negative electrode plates 212 and the fourth one of the positive electrode plates 211. What described above is just an example. Each of the positive electrode plates 211 and each of the negative electrode plates 212 of the cell 20 can also be disposed in sequence along the length direction. The number of positive electrode plates 211 and negative electrode plates 212, the type and number of the sensors 31 in the cell 20, and the position of the signal collecting terminal 131 of the sensor 31 in the cell 20 can be set according to specific circumstances.

As an alternative implementation of the above embodiments, the electrode plate 21 includes positive electrode plates 211, the electrical transmission terminal 122 includes a positive transmission terminal. The positive transmission terminal is connected to the positive electrode plate 211, the signal collecting terminal 131 is disposed on the positive electrode plate 211, and the signal output terminal 132 is coupled and electrically connected to the positive transmission terminal. That is: in this embodiment, the signal collecting terminal 131 of the sensor 31 is disposed on one of the positive electrode plates 211, and the signal output terminal 132 of the sensor 31 is coupled and electrically connected to the positive transmission terminal corresponding to the positive electrode plate 211.

In some embodiments, the positive transmission terminal includes a positive tab 122a+, a positive flexible connecting plate 122b+, and a positive pole. The signal output terminal 132 is coupled and electrically connected to the positive tab 122a+ corresponding to the positive electrode plate 211. In some embodiments, when the battery has a plurality of cells, each cell is provided with a positive tab 122a+. The positive tabs 122a+ of the cells shares a positive flexible connecting plate 122b+.

The electrode plate 21 includes negative electrode plates 212, the electrical transmission terminal 122 includes a negative transmission terminal. The negative transmission terminal is connected to the negative electrode plate 212, the signal collecting terminal 131 is disposed on the negative electrode plate 212, and the signal output terminal 132 is coupled and electrically connected to the negative transmission terminal. That is: in this embodiment, the signal collecting terminal 131 of the sensor 31 is disposed on one of the negative electrode plates 212, and the signal output terminal 132 of the sensor 31 is coupled and electrically connected to the positive transmission terminal corresponding to the negative electrode plate 212.

In some embodiments, the negative transmission terminal includes a negative tab 122a-, a negative flexible connecting plate 122b-, and a negative pole. The signal output terminal 132 is coupled and electrically connected to the negative tab 122a-corresponding to the negative electrode plate 212. When the battery has a plurality of cells, each cell is provided with a negative tab 122a-. The negative tabs 122a1 share a negative flexible connecting plate 122b1.

In some embodiments, a plurality of sensors 31 are provided in the cell 20. The signal collecting terminal 131 of one sensor 31 is disposed on the positive electrode plate 211, and then the signal output terminal 132 of the sensor is disposed on the positive transmission terminal corresponding to the positive electrode plate 211. The signal collecting terminal 131 of another sensor 31 is disposed on the negative electrode plate 212, and then the signal output terminal 132 of the sensor is disposed on the negative transmission terminal corresponding to the negative electrode plate 212.

As an alternative implementation of the embodiments described above, the sensor 31 includes at least one of a temperature sensor, an air pressure sensor, a pressure sensor or a gas sensor. In some embodiments, the sensor 31 is generally a flexible sensor. The temperature sensor is configured to collect the temperature of the cell 20, and in one cell 20, it is generally disposed between the positive electrode plate 211 and the negative electrode plate 212. If there are a plurality of cells 20, the sensor is generally disposed between two adjacent cells 20. The air pressure sensor is configured to collect the air pressure within the battery 100, and is generally disposed between the cell 20 and the housing 10. The gas sensor is generally configured to reflect the type of gas within the cell 20 and is generally disposed between the cell 20 and the housing 10. The pressure sensor is configured to collect the pressure experienced by the battery 100, and in a cell 20, the pressure sensor is generally disposed between the positive electrode plate 211 and the negative electrode plate 212; and if there are a plurality of cells 20, the pressure sensor is generally disposed between two adjacent cells 20. The pressure sensor can be disposed between the cell 20 and the housing 10.

In specific embodiments, different types of sensors 31 can be arranged according to actual needs. The installing position of the sensor 31 can also be laid out according to actual needs.

The battery 100 according to the embodiments of the present disclosure can be applied to vehicles. The battery 100 provides power to the transmission structure of the vehicle to drive the vehicle forward. In some embodiments, the vehicle may be a pure electric vehicle or a hybrid vehicle. The battery 100 adopts part or all of the technical solutions of the embodiments described above, and therefore has some or all of the technical advantages of the embodiments described above, which will not be described again herein.

### Embodiment Six

During long-term use of the battery, if safety issues arise, a large amount of gas will generally be produced inside the battery, and at the same time, the temperature inside the battery will rise sharply. In the existing technology, when analyzing battery safety issues, sensors are generally installed in the battery to detect the battery usage. However, because the sensor is in a real-time detection state, it may transmit erroneous signals to external monitoring system.

Referring to FIG. 24 to FIG. 29, this embodiment provides a battery 100 including a housing 10, a cell 20, and the sensing structure described above. The sensing structure includes one or more sensors 31 and a chip 32.

The cell 20 is disposed in the housing 10. The sensor 31 and the chip 32 are disposed in the housing 10. The chip 32 is connected to the sensor 31 and the external battery management system respectively, and is configured to receive the detection signal sent by the sensor 31, and transmit the detection result to the battery management system after performing a preliminary judgment.

In the lithium-ion battery 100 described above, the sensor 31 and the self-test chip 32 are disposed in the housing 10, so that when an abnormality occurs in the lithium-ion battery 100 during use, the sensor 31 can detect the abnormality of the battery in real time, and then accurately determine the abnormal area based on the installing position of the sensor 31. The sensor 31 transmits the detection signal to the chip 32, and the chip 32 performs a preliminary judgment and transmits the detection result which is judged as being abnormal to the battery management system, so as to avoid the occurrence of false alarms due to the direct signal transmission between the sensor 31 and the battery management system, thereby ensuring normal operation of the battery.

The lithium-ion battery 100 in the embodiments may be a prismatic battery or a cylindrical battery. When the lithium-ion battery 100 is a prismatic battery, it can be an aluminum-housing battery or a soft-pack battery. Corresponding to the prismatic battery, the cell 20 may be a wound cell or a laminated cell.

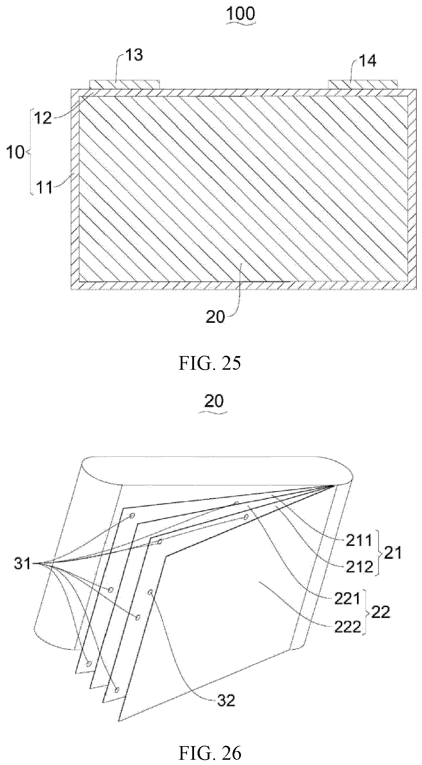

In the embodiments, the prismatic battery is taken as an example for explanation. Referring to FIG. 24 and FIG. 25, which show schematic diagrams of a structure of a prismatic battery.

The connection manner between the sensor 31 and the chip 32 in the embodiments can be a wired connection or a wireless connection, and the connection manner between the chip 32 and the external battery management system can also be a wired connection or a wireless connection. When the wireless connection is used, signals can be transmitted through wireless signal transmission such as electromagnetic, low-frequency sound waves, etc. When the wired connection is used, the sensor 31 and the chip 32 are connected through a connecting wire, and the chip 32 and the external battery management system are also connected through a connecting wire. The housing 10 includes a housing body 11 and a top cover 12. A positive pole 13 and a negative pole 14 are disposed on the top cover 12, and at this time, the connecting wire of the chip can pass through the top cover 12 and avoid the positive pole 13 and the negative pole 14.

Referring to FIG. 26 to FIG. 29, the cell 20 of the embodiments includes electrode plates 21 and a separator 22. The sensor 31 is disposed on the electrode plate 21 and/or the separator 22. The chip 32 is disposed between the electrode plate 21 and the separator 22. In this way, the status of the electrode plate 21 and the status between the electrode plate 21 and the separator 22 can be monitored in real time through the sensor 31.

Specifically, the electrode plate 21 includes one or more positive electrode plates 211 and one or more negative electrode plates 212, and the separator 22 includes one or more first separators 221 and one or more second separators 222. The positive electrode plate 211, the first separator 221, the negative electrode plate 212, and the second separator 222 are stacked in sequence. When the sensor 31 is disposed on the electrode plate 21 and the chip 32 is disposed between the electrode plate 21 and the separator 22, the sensor 31 can be disposed on the positive electrode plate 211 and/or the negative electrode plate 212, or can be disposed on the first separator 221 and/or the second separator 221. The chip 32 can be disposed between the positive electrode plate 211 and the first separator 221, and/or between the first separator 221 and the negative electrode plate 212, and/or between the negative electrode plate 212 and the second separator 222. One chip 32 can be provided, or a plurality of chips 32 may also be provided. Alternatively, in other embodiments, the sensor 31 can also be disposed between the positive electrode plate 211 and the first separator 221, and/or between the first separator 221 and the negative electrode plate 212, and/or between the negative electrode plate 212 and the second separator 222.

That is, in one embodiment, a sensing structure may include a plurality of sensors 31, the plurality of sensors 31 are all disposed on the electrode plate 21 and are respectively connected to the chip 32. The plurality of sensors 31 are connected in series or in parallel.

Specifically, when the sensor 31 is disposed on the electrode plate 21, the sensor 31 is disposed in an area where the large surface of the electrode plate 21 is parallel to the large surface of the cell 20, thereby facilitating the installation of the sensor 31.

Furthermore, in a specific embodiment of the present disclosure, in order to facilitate the molding of the entire battery, the installation of the sensor 31 and the chip 32 does not affect the molding of the entire battery too much. The sensor 31 is disposed on the outermost layer of the electrode plate 21 along the winding direction or stacking direction of the cell 20. The chip 32 is disposed between the outermost layer of the electrode plate 21 and the outermost layer of the separator 22 along the winding direction or the stacking direction of the cell 20. In this way, by disposing the sensor 31 and the chip 32 on the outermost layer, since the sensor 31 and the chip 32 have a certain thickness, the impact on the winding or stacking of the entire cell 20 can be reduced.

It can be understood that for the wound cell 20, when the sensor 31 is disposed on the electrode plate 21, the sensor 31 is disposed at the end of the electrode plate 21 along the winding direction, so that the sensor can be wound at the outermost turn of the cell 20 when the electrode plate 21 and the separator 22 are gradually wound into the cell 20. In addition, the chip 32 is disposed between the electrode plate 21 and the separator 22 of the outermost turn of the cell 20, so as to facilitate the embedding of the chip 32.

Corresponding to the laminated cell 20, when the sensor 31 is disposed on the electrode plate 21, the sensor 31 is disposed on the outermost layer of the electrode plate 21 along the laminating direction. Specifically, the sensor is disposed on the negative electrode plate 212, thereby preventing the arrangement of the sensor 31 affecting the molding of the entire cell 20. The chip 32 is disposed between the electrode plate 21 and the separator 22, specifically, the chip is disposed between the negative electrode plate 212 and the second separator 222, so as to prevent the arrangement of the sensor 32 affecting the molding of the entire cell 20.

Specifically, when the sensor 31 is disposed on the outermost layer of the electrode plate 21, at least one sensor 31 is disposed at the one-half position of the outermost layer of the electrode plate. For example, when three sensors 31 are provided, one of three sensors is disposed in the middle of the electrode plate 21 along the height direction of the housing 10, the other two are disposed on the side of the electrode plate 21 where the tab is disposed, thereby forming a triangular structure, and the three sensors can be connected in parallel or in series. When five sensors are provided, the remaining two are disposed on the side of the electrode plate 21 away from the tab, thereby forming a square structure. One sensor 31 is located in the center of the square, and the five sensors 31 can be connected in series or in parallel.

When the sensor 31 is disposed on the electrode plate 21, the sensor 31 can be embedded on the electrode plate 21 or attached to the surface of the electrode plate 21.

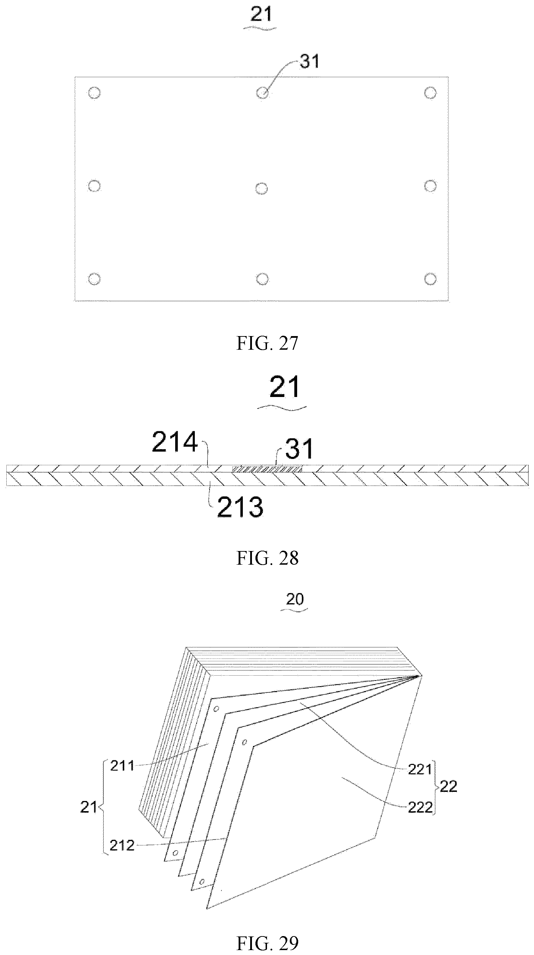

Specifically, when the sensor 31 is embedded on the electrode plate 21, each of the positive electrode plate 211 and the negative electrode plate 212 includes a base material layer 213 and a slurry layer 214 coated on the surface of the base material layer 213. Before the slurry layer 214 is coated on the base material layer 213, the sensor 31 is firstly disposed on the base material layer 213, and then the slurry layer 214 is coated on the base material layer 213, so that the sensor 31 is separated by the slurry layer 214 to avoid the immersion erosion of the electrolyte, which is as shown in FIG. 28.

When the sensor 31 is disposed on the surface of the electrode plate 21, the sensor 31 is bonded to the surface of the electrode plate 21. In this way, after the base material layer 213 is coated with the slurry layer 214, the slurry is rolled and dried to form the electrode plate 21, then the sensor 31 is bonded to the electrode plate 21, so as to facilitate the molding of the electrode plate 21, avoid affecting the coating of the slurry layer 214, and facilitate the installation of the sensor 31 on the electrode plate 21. Alternatively, in other embodiments, the sensor 31 can also be deposited on the surface of the positive electrode plate 211 through magnetron sputtering, or the sensor can also be deposited on the surface of the negative electrode plate 212 through magnetron sputtering. Magnetron sputtering is a type of physical vapor deposition (PVD). It has the advantages of simple equipment, easy control, large coating area and strong adhesion.

When a plurality of sensors 31 are disposed on the electrode plate 21, the sensors 31 are configured to monitor one or more of the temperature of the electrolyte inside the cell 20, the pondus hydrogenii (pH) information of the electrolyte, the pressure within the cell 20, the volume fraction of carbon dioxide in the cell 20, and the volume fraction of hydrogen in the cell 20. Therefore, the type of the sensors 31 may be one or more of a temperature sensor, a pressure sensor, a gas sensor and a pH sensor.

Specifically, when the lithium-ion battery 100 is damaged, it is often accompanied by thermal runaway and swollen. Battery thermal runaway means that the temperature of any cell 20 inside the lithium-ion battery 100 or the entire battery rises rapidly, and the heat cannot be dissipated in time. The sensor 31 detects the temperature inside each cell 20 and sends the detected temperature signal to the chip 32. The chip 32 initially analyzes the electrical signal sent from any one of the sensors 31 and determines whether the temperature is abnormal. When the temperature is abnormal, the chip 32 will transmit a temperature abnormality signal to the external battery management system. The battery management system cuts off the use of the corresponding battery to prevent the battery being damaged caused by the cell 20 which suffers the thermal runaway.

In the case where abnormal gases are generated during use of the lithium-ion battery 100, for example, the lithium salt in the electrolyte decomposes to produce strong acid-hydrogen fluoride and hydrogen, and the electrolyte of cell 20 inside of which the short-circuiting is occurred undergoes electrochemical decomposition reaction to produce carbon dioxide gas. Different sensors 31 will monitor the pressure, the volume fraction of hydrogen, the volume fraction of carbon dioxide, and the pondus hydrogenii of the electrolyte in each cell 20 in real time. Different sensors 31 send the detected information to the chip 32, and the chip 32 initially judges the normality of the data. When the data is abnormal, the abnormal signal is sent to the external battery management system, and the battery management system cuts off the use of the corresponding battery to prevent battery from being damage caused by the cell 20 which suffers the thermal runaway.

The sensors configured to detect the above data include a temperature sensor, a pressure sensor, a pH sensor and a gas sensor. The temperature sensor is configured to detect the temperature in each cell 20, the pressure sensor is configured to detect the pressure inside the cell 20, the pH sensor is configured to detect the pondus hydrogenii of the electrolyte inside the cell 20, the gas sensor is configured to detect gas, and the gas sensor may be a hydrogen sensor and/or a carbon dioxide sensor.

Furthermore, in order to ensure the stability of all sensors, all sensors are acid-resistant sensors. For example, the surface of each of the sensors is covered with a layer of acid-resistant polytetrafluoroethylene film.

The lithium-ion battery in the embodiments of the present disclosure can be used in a battery module. The battery module includes a plurality of the lithium-ion batteries 100 described above, and the plurality of the lithium-ion batteries 100 described above are connected in parallel or in series.

The battery module according to the embodiments of the present disclosure can be applied to a battery pack. The battery pack includes a plurality of the battery modules described above, and the plurality of battery modules are connected in series or in parallel.

In the embodiments, the sensor and the self-test chip are disposed in the housing, so that when an abnormality occurs in the lithium-ion battery during use, the sensor can detect the abnormality of the battery in real time, and then accurately determine the abnormal area based on the installing position of the sensor 31. The sensor 31 transmits the detection signal to the self-test chip, and the self-test chip performs a preliminary judgment and transmits the detection result which is judged as being abnormal to the battery management system, so as to avoid the occurrence of false alarms due to the direct signal transmission between the sensor and the battery management system, thereby ensuring normal operation of the battery.

## Claims

1. A battery **characterized by** comprising:
a housing;
one or more cells disposed in the housing; and
a sensing structure disposed in the housing, wherein the sensing structure is configured to collect status data within the battery and transmit the status data to an outside of the battery.

2. The battery according to claim 1, **characterized in that** one of the one or more cells comprises electrode plates and a separator; wherein the sensing structure is disposed on the separator and/or at least one of the electrode plates, and the sensing structure is configured to monitor the status data of the separator and/or the at least one of the electrode plates, and send the status data to an external receiving device.

3. The battery according to claim 2, **characterized in that** the separator comprises a base film, and the sensing structure is disposed on the base film.

4. The battery according to claim 3, **characterized in that** the sensing structure is a sensor layer, the sensor layer is disposed on a surface of at least one side of the base film, the sensor layer comprises a plurality of sensors distributed on a same surface of the base film, and each of the sensors is configured to monitor changing data of the base film and send the changing data to the external receiving device.

5. The battery according to claim 4, **characterized in that** the electrode plates comprise a positive electrode plate and a negative electrode plate with opposite polarities, the base film is provided with a first surface in contact with the negative electrode plate, the sensor layer comprises a first sensor layer, and the first sensor layer is disposed on the first surface; and/or,
the base film is provided with a second surface in contact with the positive electrode plate, the sensor layer comprises a second sensor layer, and the second sensor layer is disposed on the second surface.

6. The battery according to claim 5, **characterized in that** a position of each sensor in the first sensor layer is in one-to-one correspondence with a position of each sensor in the second sensor layer.

7. The battery according to claim 4, **characterized in that** the sensor layer completely covers the surface of the at least one side of the base film.

8. The battery according to any one of claims 4 to 7, **characterized in that** the sensor layer comprises a prefabricated coating and the plurality of sensors distributed in the prefabricated coating, and the plurality of sensors are evenly distributed in the prefabricated coating.

9. The battery according to any one of claims 4 to 7, **characterized in that** the base film is a single-layered structure; or
the base film has a multi-layered structure, and the sensor layer is disposed on a surface of an outermost layer of the base film.

10. The battery according to claim 3, **characterized in that** the sensing structure is a temperature sensing wire, and the temperature sensing wire is formed on a top and/or a bottom of the base film in a thickness direction and is configured to detect a temperature of the base film; wherein the temperature sensing wire is disposed on an upper side and/or a lower side in a width direction of the base film and is close to an edge of the base film; and the temperature sensing wire extends along a length direction of the base film.

11. The battery according to claim 10, **characterized in that** the electrode plates comprise a positive electrode plate and a negative electrode plate with opposite polarities, the base film is disposed between the positive electrode plate and the negative electrode plate, and the temperature sensing wire is disposed at a junction where the base film and the positive electrode plate and/or the negative electrode plate are overlapped.

12. The battery according to claim 10, **characterized in that** the base film has a porous three-dimensional structure, and a width of the temperature sensing wire is smaller than an average pore size of the base film after stretching.

13. The battery according to claim 12, **characterized in that** the width of the temperature sensing wire is less than 1 µm.

14. The battery according to any one of claims 10 to 13, **characterized in that** the temperature sensing wire is made of silica ceramic composite material.

15. The battery according to any one of claims 10 to 13, **characterized in that** the battery further comprises a chip disposed on a top portion of the battery, or a bottom portion of the battery, or a side portion of the battery, and the chip is connected to the temperature sensing wire through a connecting wire.

16. The battery according to claim 15, **characterized in that** a window is provided on a position of the housing corresponding to the chip.

17. The battery according to claim 2, **characterized in that** the electrode plates comprise a first electrode plate and a second electrode plate with opposite polarities, the separator is disposed between the first electrode plate and the second electrode plate, the first electrode plate, the separator and the second electrode plate are disposed in a wound manner, and each turn of the first electrode plate, each turn of the separator and each turn of the second electrode plate respectively comprises a planar structure and a cambered surface structure connected to each other; and
wherein the sensing structure comprises a plurality of first detecting devices, two of the first detecting devices are respectively disposed in alignment on two sides of the cambered surface structure of at least one turn of the first electrode plate, each of the two of the first detecting devices is located between a corresponding position of the first electrode plate and a position of the separator adjacent thereto, and each of the first detecting devices is configured to monitor an expansion force of a corresponding cambered surface structure of the first electrode plate.

18. The battery according to claim 17, **characterized in that** the sensing structure further comprises a plurality of second detecting devices, two of the second detecting devices are respectively disposed in alignment on two sides of the planar structure of at least one turn of the first electrode plate, each of the two of the second detecting devices is located between a corresponding position of the first electrode plate and a position of the separator adjacent thereto, and each of the second detecting devices is configured to monitor an expansion force of a corresponding planar structure of the first electrode plate.

19. The battery according to claim 18, **characterized in that** a planar structure of any turn of the first electrode plate comprises a first plane and a second plane disposed oppositely, the first plane is provided with multiple ones of the second detecting devices, the multiple ones of the second detecting devices are respectively disposed in positions close to two ends and in a middle of the first plane, and multiple ones of the second detecting devices on the second plane are disposed in alignment with the multiple ones of the second detecting devices on the first plane.

20. The battery according to claim 18, **characterized in that** each of the first detection devices and each of the second detection devices are disposed on a same turn of the first electrode plate;
and/or, each of the first detecting devices and each of the second detecting devices are disposed on different turns of the first electrode plate.

21. The battery according to claim 18, **characterized in that** each of the first detecting devices comprises a probe and a magnet, the magnet is disposed on the probe, each of the probe and the magnet is provided with an insulating layer, two magnets of two of the first detecting devices located on two sides of a same position of the first electrode plate have opposite polarities;
and/or each of the second detecting devices comprises a probe and a magnet, the magnet is disposed on the probe, each of the probe and the magnet is provided with an insulating layer, two magnets of two of the second detecting devices located on two sides of a same position of the first electrode plate have opposite polarities.

22. The battery according to any one of claims 17 to 21, **characterized in that** the first electrode plate is wound into a plurality of turns from inside to outside; wherein,
at least one of the first detecting devices is disposed on any turn of the first electrode plate close to an inner side;
and/or, at least one of the first detecting devices is disposed on any turn of the first electrode plate close to a middle portion;
and/or, at least one of the first detecting devices is disposed on any turn of the first electrode plate close to an outer side.

23. The battery according to any one of claims 17 to 21, **characterized in that** the sensing structure further comprises third detecting devices, and each of two sides of the one of the one or more cells is provided with multiple ones of the third detecting devices, each of the third detection devices is located between the one of the one or more cells and the housing, and each of the third detecting devices is configured to monitor an expansion force at a corresponding position of the one of the one or more cells.

24. The battery according to claim 23, **characterized in that** multiple ones of the third detecting devices are disposed on a same side surface of the one of the one or more cells, and the multiple ones of the third detecting devices are respectively disposed at positions close to two ends and a middle portion of the one of the one or more cells.

25. The battery according to claim 23, **characterized in that** each of the first detecting devices comprises at least one of a displacement sensor and a pressure sensor;
each of the second detecting devices comprises at least one of a displacement sensor and a pressure sensor; and
each of the third detecting devices comprises at least one of a displacement sensor and a pressure sensor.

26. The battery according to claim 23, **characterized in that** each of the first detecting devices is a coating sensor;
and/or, each of the second detecting devices is a coating sensor or a probe sensor;
and/or, each of the third detecting devices is a coating sensor or a probe sensor.

27. The battery according to claim 2, **characterized in that** the sensing structure comprises one or more sensors and a self-test chip, the self-test chip is respectively connected to the one or more sensors and an external battery management system, and the self-test chip is configured to receive a detection signal sent by the one or more sensors and perform a preliminary judgement, and transmit the detection signal to the battery management system.

28. The battery according to claim 27, **characterized in that** one of the one or more sensors is disposed on one of the electrode plates and/or the separator, and the self-test chip is disposed between one of the electrode plates and the separator.

29. The battery according to claim 28, **characterized in that** the one of the one or more sensors is embedded on the one of the electrode plates or attached to a surface of the one of the electrode plates.

30. The battery according to claim 29, **characterized in that** the one of the electrode plates comprises a base material layer and a slurry layer, and the one of the one or more sensors is disposed between the base material layer and the slurry layer, or the one of the one or more sensors is bonded to an outer surface of the slurry layer.

31. The battery according to claim 29, **characterized in that** the sensing structure comprises a plurality of said sensors, each of the plurality of sensors is disposed on one of the electrode plates and respectively connected to the self-test chip, and the plurality of sensors are connected in series or parallel.

32. The battery according to claim 29, **characterized in that** the one of the one or more sensors is disposed in an area where a large surface of the one of electrode plates is parallel to a large surface of the one of the one or more cells.

33. The battery according to claim 32, **characterized in that** the one of the one or more sensors is disposed on an outermost layer of the one of the electrode plates along a winding direction or a stacking direction of the one of the one or more cells, and the self-test chip is disposed between the outermost layer of one of the electrode plates and an outermost layer of the separator along the winding direction or the stacking direction of the one of the one or more cells.

34. The battery according to claim 33, **characterized in that** at least one of the one or more sensors is disposed at a one-half position of the outermost layer of the one of the electrode plates along a height direction of the housing.

35. The battery according to claim 2, **characterized in that** the battery further comprises an electrical transmission terminal, the electrical transmission terminal is connected to one of the electrode plates, and at least part of the electrical transmission terminal is disposed outside the housing; and
wherein the sensing structure comprises a sensor, and the sensor comprises a signal collecting terminal and a signal output terminal;
wherein the signal collecting terminal is disposed in the housing and is configured to collect status parameters in the battery; and
the signal output terminal is coupled and electrically connected to the electrical transmission terminal to transmit the status parameters to an outside of the battery through the electrical transmission terminal.

36. The battery according to claim 35, **characterized in that** the housing comprises a top cover;
wherein the electrical transmission terminal comprises: a tab and a pole; the pole is disposed on the top cover and is at least partially located outside the housing; the tab is integrally disposed on the one of the electrode plates and connected to the pole; and the signal output terminal is coupled and electrically connected to the tab.

37. The battery according to claim 36, **characterized in that** the electrical transmission terminal further comprises a flexible connecting plate, and the tab is connected to the pole through the flexible connecting plate.

38. The battery according to claim 35 or 36, **characterized in that** the tab comprises:
a current collector, wherein the current collector is connected to the one of the electrode plates and the pole respectively; and
an active layer, wherein the active layer is disposed on the current collector;
wherein the signal output terminal is coupled and electrically connected to an area of the current collector where the active layer is disposed.

39. The battery according to claim 38, **characterized in that** the signal output terminal is integrally disposed with the current collector.

40. The battery according to any one of claims 35 to 37, **characterized in that** the signal collecting terminal is disposed between the housing and the one of the one or more cells.

41. The battery according to any one of claims 35 to 37, **characterized in that** at least two said cells are provided, and the signal collecting terminal is disposed between two adjacent ones of the at least two said cells.

42. The battery according to any one of claims 35 to 37, **characterized in that** the electrode plates comprise a first electrode plate and a second electrode plate, and the signal collecting terminal is disposed between the first electrode plate and the second electrode plate.

43. The battery according to any one of claims 35 to 37, **characterized in that** the electrode plates comprise a positive electrode plate, the electrical transmission terminal comprises a positive transmission terminal, the positive transmission terminal is connected to the positive electrode plate, the signal collecting terminal is disposed on the positive electrode plate, and the signal output terminal is coupled and electrically connected to the positive transmission terminal; and/or
the electrode plates comprise a negative electrode plate, the electrical transmission terminal comprises a negative transmission terminal, the negative transmission terminal is connected to the negative electrode plate, the signal collecting terminal is disposed on the negative electrode plate, and the signal output terminal is coupled and electrically connected to the negative transmission terminal.

44. The battery according to any one of claims 35 to 37, **characterized in that** the sensor comprises at least one of a temperature sensor, an air pressure sensor, a pressure sensor or a gas sensor.

45. A battery monitoring system **characterized by** comprising:
the battery according to any one of claims 1 to 44; and
a receiving device, wherein the receiving device is connected to the battery, and the receiving device is configured to receive the status data sent by the sensing structure.

46. A battery module **characterized by** comprising a plurality of batteries according to any one of claims 1 to 44, and the plurality of batteries are connected in series or in parallel.

47. A battery pack **characterized by** comprising a plurality of battery modules according to claim 46, and the plurality of battery modules are connected in series or in parallel.

48. A vehicle **characterized by** comprising the battery pack according to claim 47.
